(19) Europäisches Patentamt
European Patent Office
Office européen des brevets

(11) **EP 4 786 246 A1**

(12) **EUROPEAN PATENT APPLICATION**
published in accordance with Art. 153(4) EPC

(43) Date of publication:
05.08.2026 Bulletin 2026/32

(21) Application number: 24871743.1

(22) Date of filing: 02.09.2024

(51) International Patent Classification (IPC):
*B60L 3/10* (2006.01)      *B60B 35/02* (2006.01)
*B60L 9/18* (2006.01)      *B60T 8/171* (2006.01)
*B60T 8/172* (2006.01)      *B60W 30/02* (2012.01)
*G01L 5/20* (2006.01)

(52) Cooperative Patent Classification (CPC):
B60B 35/02; B60L 3/10; B60L 9/18; B60T 8/171;
B60T 8/172; B60W 30/02; G01L 5/20

(86) International application number:
PCT/JP2024/031468

(87) International publication number:
WO 2025/069943 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.09.2023 JP 2023165943

(71) Applicant: **DENSO CORPORATION**
**Kariya-city, Aichi 448-8661 (JP)**

(72) Inventor: **HORIHATA, Harumi**
**Kariya- city, Aichi 4488661 (JP)**

(74) Representative: **Kuhnen & Wacker**
**Patent- und Rechtsanwaltsbüro PartG mbB**
**Prinz-Ludwig-Straße 40 A**
**85354 Freising (DE)**

(54) **CONTROL DEVICE AND PROGRAM**

(57)    A wheel sensor includes a first sensor unit that rotates together with the wheel (10, 20) around a rotational axis extending in a predetermined axial direction, and a second sensor unit that is fixed to the base portion (42) and positioned to face the first sensor unit in the axial direction. Excitation coils (100A, 100B) are also provided. Of the first and second sensor units, one serves as a detection target portion (81, 82) formed in an annular shape around the rotational axis, while the other serves as a receiving coil (110A, 120A, 110B, 120B). When an excitation voltage is supplied to the excitation coil, the receiving coil outputs an AC voltage signal with an amplitude corresponding to the relative displacement of the detection target portion with respect to the receiving coil. A control device (171) applied to the wheel sensor calculates a force acting on the wheel based on the voltage signal output from the receiving coil, and calculates a parameter used for slip suppression control of the vehicle based on the calculated force.

**FIG. 1**

## Description

CROSS REFERENCE TO RELATED APPLICATION

This application is based on Japanese Patent Application No. 2023-165943 filed on September 27, 2023, the contents of which are hereby incorporated by reference.

TECHNICAL FIELD

The present disclosure relates to a control device and a program.

BACKGROUND ART

Conventionally, control devices are known which drive a vehicle while suppressing wheel slip, based on vehicle information including a wheel load and a road friction coefficient between wheels and a road surface. The vehicle information is estimated from factors such as the driving environment of the vehicle, operation information of the vehicle, and detection values from sensors installed in the vehicle. It should be noted that technologies related to such wheel slip suppression control are described, for example, in Patent Literature 1.

PRIOR ART LITERATURE

PATENT LITERATURE

Patent Literature 1: JP 2019-217838 A

SUMMARY OF INVENTION

In wheel slip suppression control, there is concern that vehicle information may not be properly obtained. In this case, there is concern that the wheels may slip.

The main object of the present disclosure is to provide a control device and program capable of suppressing wheel slip.

According to the present disclosure, a control device is adapted to a wheel sensor. The wheel sensor has a first sensor unit, a second sensor unit, and an excitation coil. The first sensor unit is fixed to a wheel of a vehicle. The first sensor unit is rotated along with a rotation of the wheel around a rotational axis extending in a predetermined axial direction. The second sensor unit is fixed to a base portion and disposed at a position facing the first sensor unit in the predetermined axial direction. A detection target unit is one of the first sensor unit and the second sensor unit. The detection target unit has an annular shape centered on the rotational axis. A receiving coil is another of the first sensor unit and the second sensor unit. The receiving coil outputs an AC voltage signal having an amplitude that is varied with a relative displacement of the detection target unit to the receiving coil. The excitation coil receives an AC excitation voltage. The control device includes: a force calculation unit that calculates a force acting on the wheel based on the AC voltage signal output from the receiving coil; and a parameter calculation unit that calculates a parameter to be used in slip suppression control of the vehicle based on the calculated force.

The wheel sensor is provided with a detection target portion, an excitation coil, and a receiving coil. The receiving coil outputs an AC voltage signal when an excitation voltage is supplied to the excitation coil. When a force acts on the wheel, the relative position between the detection target portion and the receiving coil changes, resulting in a change in the amplitude of the voltage signal from the receiving coil. In view of this, the control device calculates the force acting on the wheel based on the voltage signal output from the receiving coil.

Here, if the wheel is rotationally driven without properly acquiring the condition of the road surface on which the vehicle is traveling, there is a concern that the wheel may slip. Therefore, in the present disclosure, the above parameter is calculated based on the force acting on the wheel. According to the calculated parameter, it is possible to rotationally drive the wheel while suppressing wheel slip. As a result, wheel slip can be suppressed.

BRIEF DESCRIPTION OF DRAWINGS

The above and other objects, features and advantages of the present disclosure will become more apparent from the following detailed description when taken in conjunction with the accompanying drawings. In the drawings:

FIG. 1 is a longitudinal sectional view of a wheel according to a first embodiment;

FIG. 2 is a plan view of a target rotor and a detection unit;

FIG. 3 is a plan view of the detection unit;

FIG. 4 is a projection view of an excitation coil and receiving coils as seen in plan view of a substrate;

FIG. 5 is a diagram showing a relative positional relationship of the receiving coils;

FIG. 6 is a diagram showing an electrical configuration of a control device and the detection unit;

FIG. 7 is an overall configuration diagram of an in-vehicle system;

FIG. 8 is a functional block diagram showing the processing of a motor ECU;

FIG. 9 is a diagram showing a state in which an inner ring is tilted to an outer ring when a lateral load acts on a tire;

FIG. 10 is a diagram showing a vertical displacement of the inner ring when a vertical load acts on the tire;

FIG. 11 is a diagram for explaining the principle of detection of displacement and rotational angle;

FIG. 12 is a diagram for explaining the principle of detection of displacement and rotational angle;

FIG. 13 is a plan view of a simplified wide receiving coil;

FIG. 14 is a diagram showing a transition of an output voltage signal of the receiving coil and an envelope of the output voltage signal;

FIG. 15 is a diagram showing a transition of the envelope in the output voltage signals of the receiving coils;

FIG. 16 is a characteristic diagram showing a relationship between an amplitude of each signal and axial displacement;

FIG. 17 is a diagram showing a change from a reference state of the envelope when a lateral load is applied;

FIG. 18 is a characteristic diagram showing the relationship between the amplitude of each signal and vertical displacement;

FIG. 19 is a diagram showing the relative positional relationship between each receiving coil and a shielding unit when a vertical load is applied;

FIG. 20 is a diagram showing a change from the reference state of the envelope when a vertical load is applied;

FIG. 21 is a functional block diagram showing the processing of a force calculation unit and a speed calculation unit;

FIG. 22 is a diagram showing a relationship between a slip ratio and a coefficient of friction;

FIG. 23 is a diagram showing a relationship among an allowable upper limit value of longitudinal force, an allowable upper limit value of lateral force, and a resultant force;

FIG. 24 is a flowchart showing a procedure of slip suppression control;

FIG. 25 is a flowchart showing a procedure for calculating control torque;

FIG. 26 is a functional block diagram showing processing of a motor ECU according to a second embodiment;

FIG. 27 is a flowchart showing a procedure of slip suppression control;

FIG. 28 is a flowchart showing a procedure for calculating control torque;

FIG. 29 is a time chart showing a transition of each parameter;

FIG. 30 is a functional block diagram showing processing of a motor ECU according to a third embodiment;

FIG. 31 is a diagram showing a relationship between a vertical force and an estimated vertical force;

FIG. 32 is a flowchart showing a procedure for calculating the estimated vertical force;

FIG. 33 is a diagram showing an application region of the estimated vertical force;

FIG. 34 is a configuration diagram of an in-vehicle system according to another embodiment; and

FIG. 35 is a configuration diagram of an in-vehicle system according to another embodiment.

EMBODIMENTS FOR CARRYING OUT INVENTION

Hereinafter, multiple embodiments will be described with reference to the drawings. In multiple embodiments, functionally and/or structurally corresponding parts and/or associated parts may be assigned the same reference numerals or reference numerals differing by hundreds digit. For corresponding parts and/or associated parts, reference may be made to the descriptions of other embodiments.

(First Embodiment)

A first embodiment, which concretely implements the control device according to the present disclosure, will be described below with reference to the drawings. A control device according to the present embodiment is applied to a wheel sensor and is capable of calculating a force acting on a wheel (drive wheel). A vehicle is, for example, a four-wheeled passenger vehicle having two front wheels and two rear wheels. However, the vehicle is not limited to this and may be a vehicle other than a four-wheeled vehicle, such as a two-wheeled vehicle. In addition, the use of the vehicle is not limited to passenger use.

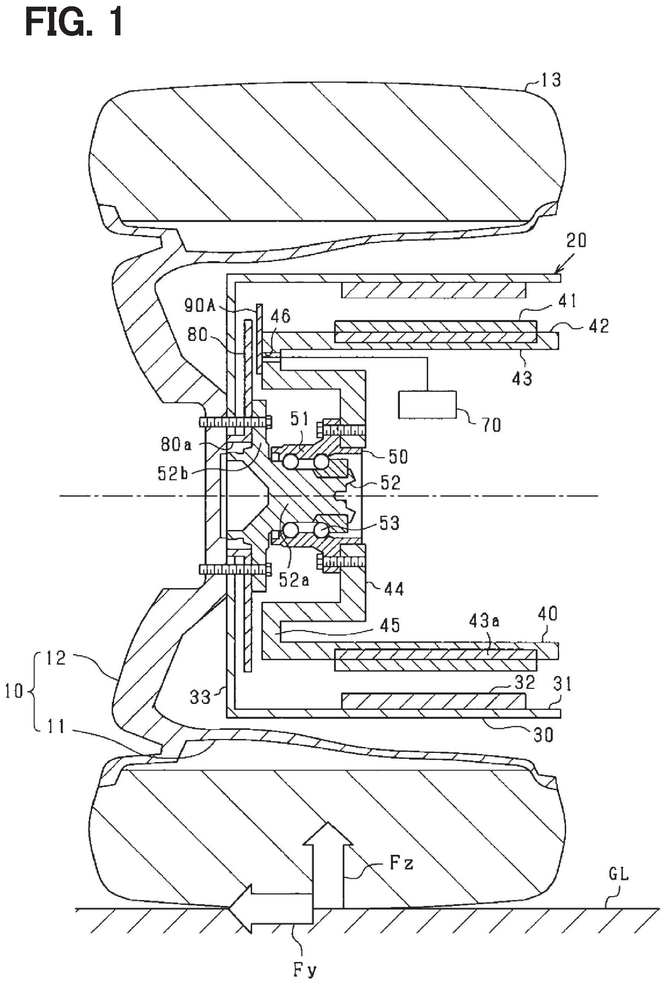

As shown in FIG. 1, a wheel unit includes a wheel 10 and an in-wheel motor 20 as rotating objects. The wheel 10 includes a cylindrical rim portion 11 and a disc-shaped disk portion 12 provided at an outer end in the vehicle width direction of the rim portion 11. A tire 13 mounts on the outer circumference of the rim portion 11.

The in-wheel motor 20 is housed within the inner space of the wheel 10, which is enclosed by the rim portion 11 and the disk portion 12, and applies rotational power to the wheel 10. The in-wheel motor 20 is an outer rotor type motor including a rotor 30 and a stator 40 disposed radially inside the rotor 30.

The rotor 30 includes a cylindrical magnet holding portion 31 and a magnet unit 32 provided on the inner circumferential surface of the magnet holding portion 31. The magnet holding portion 31 faces the inner circumferential surface of the rim portion 11. The magnet unit 32 has a cylindrical shape concentric with a rotational axis of the rotor 30, and includes magnets fixed to the inner circumferential surface of the magnet holding portion 31. In other words, the in-wheel motor 20 according to the present embodiment is a surface permanent magnet synchronous machine (SPMSM). In the magnet unit 32, the magnets are arranged such that their polarities alternate along the circumferential direction extending around the rotational axis of the rotor 30. As a result, magnetic poles are formed in the magnet unit 32 in the circumferential direction. The magnets are, for example, sintered neodymium magnets. Incidentally, the in-wheel motor 20 may also be an interior permanent magnet synchronous machine (IPMSM).

The rotor 30 is provided at the outer end section in the vehicle width direction of the magnet holding portion 31 and includes a disc-shaped flat plate portion 33 that connects the magnet holding portion 31 and the disk portion 12. The disk portion 12 is fastened to the flat plate portion 33 with bolts. As a result, the rotor 30 and the wheel 10 rotate together as a single unit.

The stator 40 includes a cylindrical stator winding 41 disposed at a position facing the magnet unit 32 in the radial direction, and a cylindrical stator base portion 42 provided on the radially inner side of the stator winding 41. The stator winding 41 includes a coil side portion provided at a position facing the magnet unit 32 in the radial direction, and coil end sections provided at both axial ends of the coil side portion.

The stator base portion 42 is fixed to the vehicle body via, for example, a knuckle, and holds the stator winding 41 and other components. The stator base portion 42 includes a cylindrical portion 43 that is fixed to the vehicle body. Of the cylindrical portion 43, the section adjacent to the stator winding 41 in the radial direction serves as a stator core 43a.

The stator base portion 42 includes a fixing portion 44 that extends radially inward from one axial end of the cylindrical portion 43. The fixing portion 44 and a bearing 50 support the rotor 30 so as to be rotatable with respect to the stator base portion 42. Of the fixing portion 44, the radially outer end section is formed as an annular protruding portion 45 that protrudes toward the flat plate portion 33. Of the protruding portion 45, the section facing the flat plate portion 33 is formed as a flat surface.

The bearing 50 is a rolling bearing (for example, a radial ball bearing), and includes an outer ring 51 corresponding to a first bearing member, an inner ring 52 corresponding to a second bearing member, and rolling elements 53 (e.g., balls) disposed between the outer ring 51 and the inner ring 52. The outer ring 51 is fixed to the fixing portion 44 by bolts. The inner ring 52 includes a cylindrical portion 52a that faces the outer ring 51 in the radial direction, and a flange portion 52b that extends radially outward from one axial end of the cylindrical portion 52a. The flange portion 52b is fixed to the flat plate portion 33 and the disk portion 12 by bolts. It should be noted that FIG. 1 shows a state in which the inner ring 52 and the outer ring 51 are coaxial.

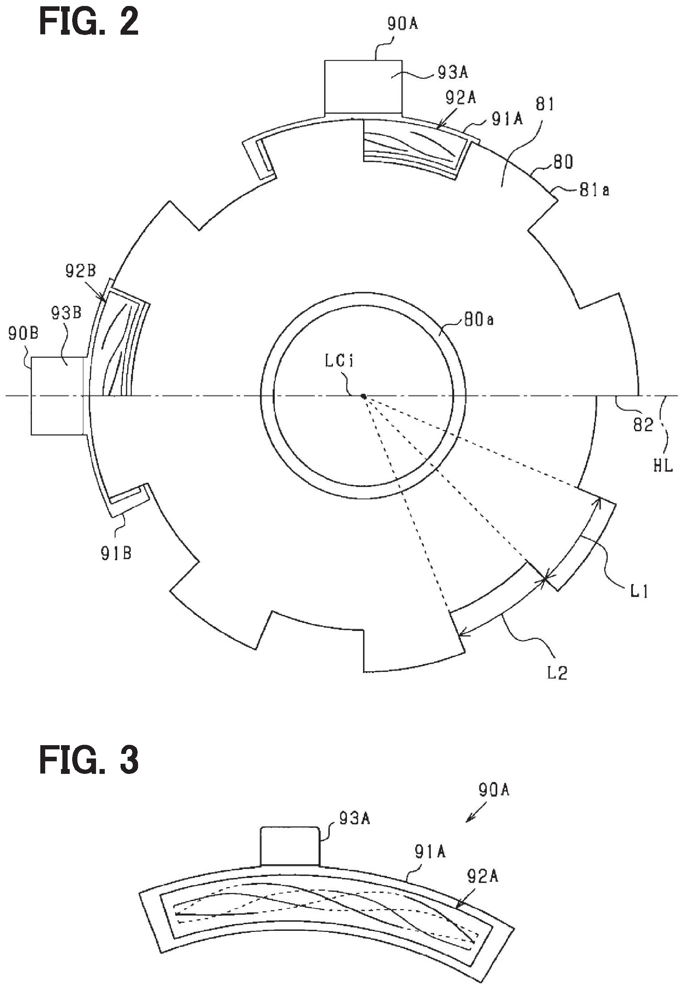

A wheel sensor is provided in the inner space of the wheel 10. As shown in FIGS. 1 and 2, the wheel sensor includes a disc-shaped target rotor 80. The target rotor 80 is made of a metallic material (for example, iron or aluminum). A through-hole is formed in the central portion of the target rotor 80, and the target rotor 80 has an annular shape. The peripheral edge of the through-hole in the target rotor 80 is formed as a bent portion 80a that bends in the direction of the disk portion 12. The bent portion 80a is fitted into the through-hole formed in the central section of the flat plate portion 33 of the rotor 30. The target rotor 80 is fixed to the flange portion 52b of the inner ring 52 by bolts in a state where it is separated from the flat plate portion 33 of the rotor 30 and is in surface contact with the flange portion 52b. As a result, the target rotor 80 and the inner ring 52 are coaxially aligned. The target rotor 80, rotor 30, and wheel 10 rotate integrally as a unit. It should be noted that, in the present embodiment, the target rotor 80 corresponds to the "first sensor."

The radially outer end section of the target rotor 80 faces the protruding portion 45 of the stator base portion 42. As shown in FIG. 2, at the radially outer end section of the target rotor 80, a metal shielding portion 81 and a notch 82 penetrating in the plate thickness direction of the target rotor 80 are alternately formed in the circumferential direction. By means of the shielding portion 81 and the notch 82, an annular "detection target" is formed. In the present embodiment, the circumferential length L1 of the shielding portion 81 and the circumferential length L2 of the notch 82 are equal. Further, in the example shown in FIG. 2, eight pairs of shielding portions 81 and notches 82 are provided.

The wheel sensor includes a first detection unit 90A and a second detection unit 90B. The first detection unit 90A and the second detection unit 90B are so-called eddy current-type inductive sensors. As shown in FIGS. 2 and 3, the first detection unit 90A includes a first substrate 91A, a first coil part 92A provided on the first substrate 91A, and a first circuit part 93A. FIG. 2 is a view showing the target rotor 80 as seen from the outside in the vehicle width direction. FIG. 3 is a view showing the first substrate 91A as seen from the outside in the vehicle width direction. The first substrate 91A is fixed to the flat surface of the protruding portion 45. As a result, the first substrate 91A extends in a direction orthogonal to the axial direction of the outer ring 51. In the present embodiment, the first substrate 91A is fixed to the flat surface at the upper end section of the annular protruding portion 45. The first substrate 91A is a multilayer substrate. The first coil part 92A is provided at a position facing the target rotor 80 in the axial direction.

The second detection unit 90B includes a second substrate 91B, a second coil part 92B, and a second circuit part 93B. The configuration of the second detection unit 90B is similar to that of the first detection unit 90A. The first substrate 91A corresponds to the second substrate 91B, and the first coil part 92A corresponds to the second coil part 92B. Further, the first circuit part 93A corresponds to the second circuit part 93B. Hereinafter, a detailed description of the second detection unit 90B will be omitted.

The second detection unit 90B is provided at a position different from that of the first detection unit 90A with respect to the target rotor 80. The second detection unit 90B is provided at a position on the peripheral edge of the target rotor 80 that faces, in the vehicle width direction, either the front end or the rear end of the vehicle. The second coil part 92B formed on the second substrate 91B of the second detection unit 90B is provided so as to straddle the horizontal axis HL passing through the central axis LCi of the inner ring 52 (the rotational center of the target rotor 80). Hereinafter, the first coil part 92A will be mainly described in detail.

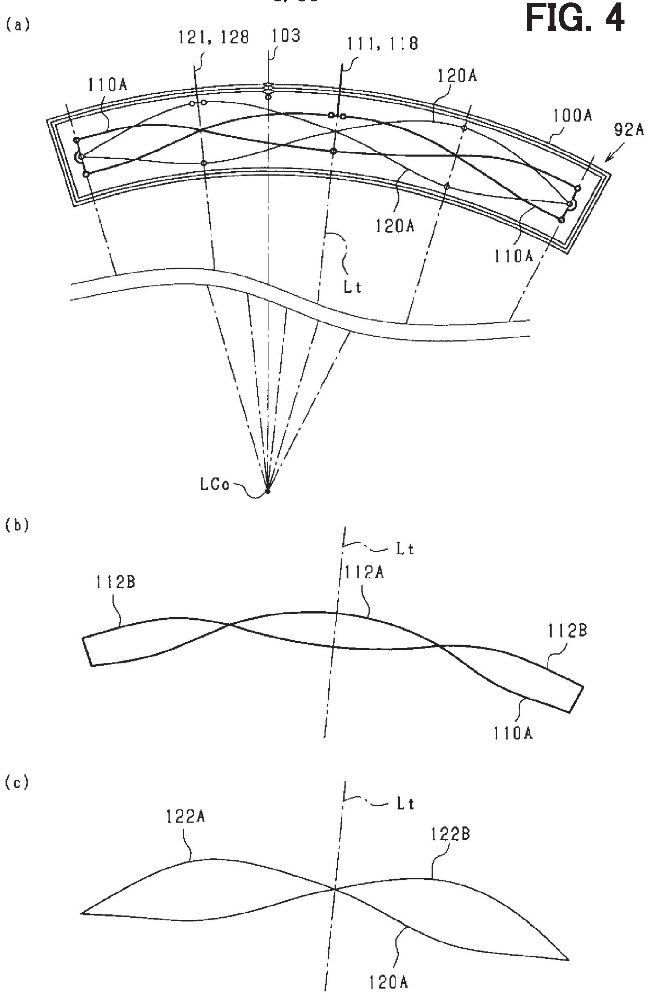

As shown in FIG. 4(a), the first coil part 92A includes a first excitation coil 100A, a first short-width receiving coil 110A, and a first large-width receiving coil 120A. Each of the coils 100A, 110A, and 120A is a planar coil. Each of the coils 100A, 110A, and 120A is made by wiring patterns and vias formed in respective layers of the first substrate 91A. As a result, even in cases where a wide space in the axial direction cannot be secured in the inner space of the wheel 10, the structure allows for easy arrangement of each of the coils 100A, 110A, and 120A. It should be noted that each of the receiving coils 110A and 120A, as well as each of the receiving coils 110B and 120B forming the second coil part 92B, correspond to a "second sensor."

The first excitation coil 100A is a planar coil having multiple turns and is formed in an arc shape extending in the circumferential direction of the outer ring 51. Each of the receiving coils 110A and 120A is provided in a region surrounded by the first excitation coil 100A in a plan view of the first substrate 91A. The circumferential lengths of the receiving coils 110A and 120A are the same as each other.

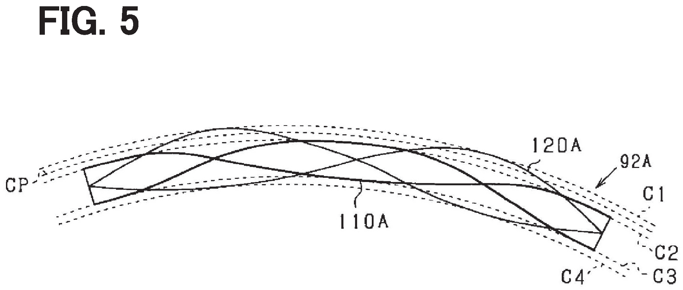

As shown in FIG. 5, the radial length of the first large-width receiving coil 120A is greater than the radial length of the first short-width receiving coil 110A, and the first large-width receiving coil 120A has a greater width in the radial direction compared to the first short-width receiving coil 110A. Specifically, in a plan view of the first substrate 91A, the position of the radially outer end of the first large-width receiving coil 120A exists on a first concentric circle C1 centered on the central axis LCo of the outer ring 51 (see FIG. 4). The position of the radially outer end of the first short-width receiving coil 110A exists on a second concentric circle C2 centered on the central axis LCo. The radius of the second concentric circle C2 is smaller than the radius of the first concentric circle C1. The position of the radially inner end of the first short-width receiving coil 110A exists on a third concentric circle C3 centered on the central axis LCo. The radius of the third concentric circle C3 is smaller than the radius of the second concentric circle C2. The position of the radially inner end of the first large-width receiving coil 120A exists on a fourth concentric circle C4 centered on the central axis LCo. The radius of the fourth concentric circle C4 is smaller than the radius of the third concentric circle C3.

The radially outer end section of the first large-width receiving coil 120A protrudes beyond the radially outer end 81a of the shielding portion 81 in the reference state. The reference state can be set arbitrarily. The reference state refers, for example, to the stopped state of a vehicle, specifically a state in which the vehicle is parked on a level road surface. The CP shown in FIG. 5 is a concentric circle CP centered on the central axis $LC_0$ of the outer ring 51 and passing through the radially outer end 81a of the shielding portion 81 in the reference state.

Each receiving coil 110A, 120A, when an excitation voltage is supplied to the first excitation coil 100A, includes: a first portion that generates a first polarity voltage between the first receiving ends 111, 121 and the second receiving ends 118, 128 of each receiving coil 110A, 120A; and a second portion that generates a second polarity voltage, which is opposite to the first polarity.

As shown in FIG. 4(b), in the first short-width receiving coil 110A, in a plan view of the first substrate 91A, the central portion in the circumferential direction of the first short-width receiving coil 110A is formed as the first portion 112A with one turn, and both end sections of the first short-width receiving coil 110A, which are at the ends of the first portion 112A, are formed as second portions 112B, each having the same number of turns (one turn) as the first portion 112A. As a result, the pattern shapes of the first and second portions 112A, 112B on one side with respect to the central circumferential axis Lt of the first short-width receiving coil 110A, and the pattern shapes of the first and second portions 112A, 112B on the other side, are symmetrical with respect to the central axis Lt.

As shown in FIG. 4(c), in the first large-width receiving coil 120A, in a plan view of the first substrate 91A, one side with respect to the central circumferential axis Lt of the first large-width receiving coil 120A is formed as the first portion 122A, and the other side is formed as the second portion 122B.

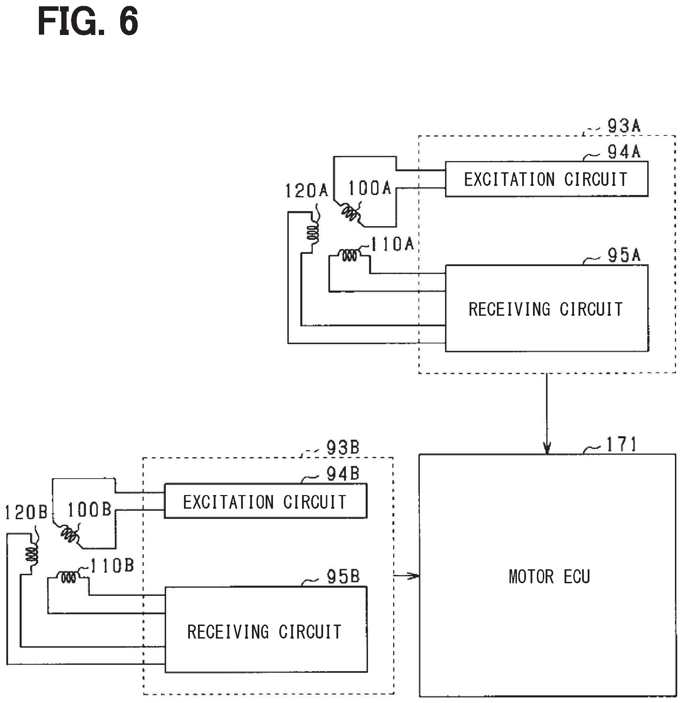

As shown in FIG. 1 and FIG. 6, the first circuit part 93A and the second circuit part 93B are electrically connected to the motor ECU 171. Specifically, a through-hole 46 is formed in the protruding portion 45, and the motor ECU 171, the first circuit part 93A, and the second circuit part 93B are electrically connected via wiring that is passed through a through-hole 46.

The first circuit part 93A and the second circuit part 93B are each constructed by an integrated circuit. As shown in FIG. 6, the first circuit part 93A includes a first excitation circuit 94A and a first receiving circuit 95A. The first excitation circuit 94A supplies a high-frequency excitation voltage to the first excitation coil 100A. When the excitation voltage is supplied to the first excitation coil 100A, a voltage having the same or equivalent frequency as the excitation voltage is induced in the first short-width receiving coil 110A and the first large-width receiving coil 120A. The first receiving circuit 95A detects the voltage across both ends of each receiving coil 110A and 120A as output voltage signals.

The second circuit part 93B includes a second excitation circuit 94B and a second receiving circuit 95B. The second excitation circuit 94B supplies a high-frequency excitation voltage to the second excitation coil 100B. When the excitation voltage is supplied to the second excitation coil 100B, a voltage having the same or equivalent frequency as the excitation voltage is induced in the second short-width receiving coil 110B and the second large-width receiving coil 120B. The second receiving circuit 95B detects the voltage across both ends of each receiving coil 110B and 120B as output voltage signals.

It should be noted that the first circuit part 93A and the second circuit part 93B are configured mainly using, for example, a microcontroller. The functions provided by the microcontrollers of the first circuit part 93A and the second circuit part 93B can be implemented by software recorded on a tangible memory device and a computer that executes it, by software alone, by hardware alone, or by any combination thereof. For example, when the microcontroller is provided by electronic circuitry as hardware, it can be implemented by digital circuits comprising numerous logic circuits, or by analog circuits. For example, the microcontroller executes a program stored in a non-transitory tangible recording medium serving as its own storage unit. By executing a set of instructions constituting the program, the method corresponding to the program is carried out. The storage unit is, for example, a non-volatile memory. The program stored in the storage unit can be updated via a network such as the Internet, for example, through OTA (Over The Air) or similar methods.

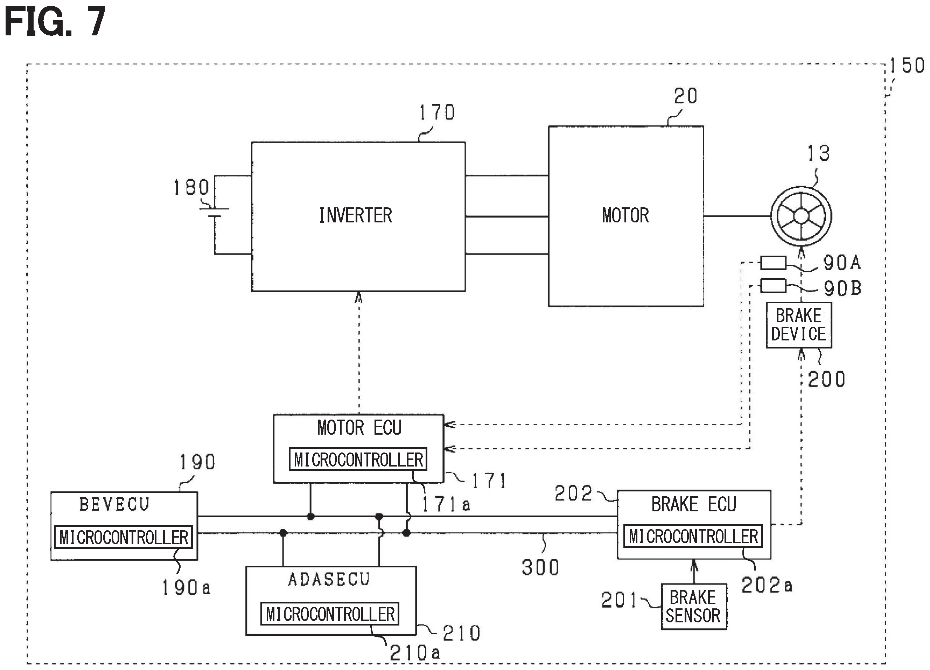

Next, the overall configuration of the system according to the present embodiment will be described with reference to FIG. 7. As shown in FIG. 7, a vehicle 150 includes the in-wheel motor 20. The in-wheel motor 20 serves as the onboard main unit, and its rotor 30 is capable of transmitting power to the wheel (tire 13) of the vehicle 150. The torque generated by the in-wheel motor 20 functioning as an electric motor is transmitted from the rotor 30 to the tire 13. As a result, the tire 13 is rotationally driven.

The vehicle 150 includes: an inverter 170 that is electrically connected to the stator winding 41 of the in-wheel motor 20; and a DC power supply 180 that is electrically connected to the inverter 170. The DC power supply 180 is provided in the vehicle body, and is, for example, a rechargeable battery such as a lithium-ion battery, or a fuel cell. In the present embodiment, upper and lower arm switches of the inverter 170 are voltage-controlled semiconductor switching elements, specifically IGBTs. Accordingly, the high-potential terminal of each switch, i.e., the upper and lower arm switches, is the collector, and the low-potential terminal is the emitter.

In each phase, the emitter of the upper arm switch and the collector of the lower arm switch are connected to a first end of the stator winding 41. However, since the fact that the in-wheel motor 20 includes the stator winding 41 and the rotor 30, and that the inverter 170 includes upper and lower arm switches, are not essential components in this context, the stator winding and related elements are omitted from illustration in FIG. 7.

The vehicle 150 includes a first detection unit 90A, a second detection unit 90B, and a motor ECU 171. The first detection unit 90A detects the rotational angle θ (specifically, the electrical angle or mechanical angle) of the rotor 30 of the in-wheel motor 20. The first detection unit 90A also detects the lateral load Fy acting between the ground surface (GL) and the tire 13, as well as the force acting vertically between the ground surface GL and the wheel with respect to the ground surface GL (hereinafter referred to as the vertical load Fz). The direction in which the lateral load Fy acts and the direction in which the vertical load Fz acts are orthogonal to each other.

The second detection unit 90B detects the force acting between the ground surface GL and the tire 13 in the longitudinal direction of the vehicle 150 (hereinafter referred to as the longitudinal load Fx). The direction in which the lateral load Fy acts and the direction in which the longitudinal load Fx acts are orthogonal to each other. The second detection unit 90B may further detect at least one of the rotational angle θ and the lateral load Fy. The detection values of the first detection unit 90A and the second detection unit 90B are provided to the motor ECU 171.

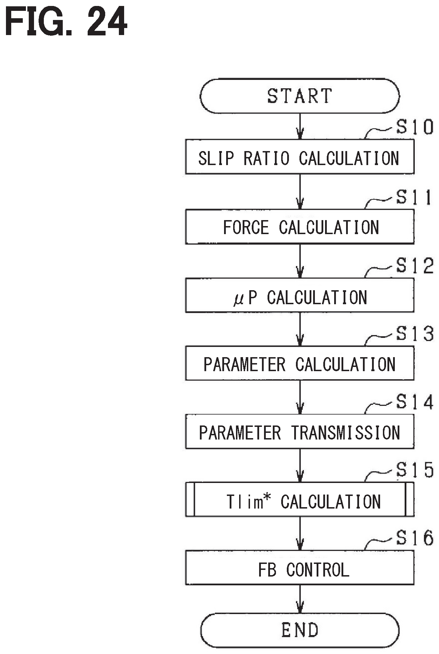

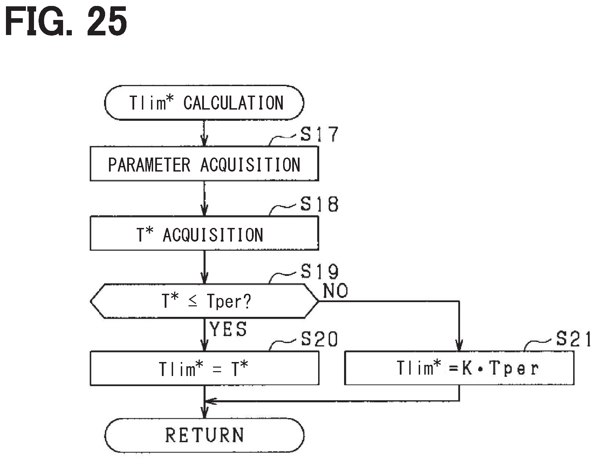

The motor ECU 171 is mainly configured with a microcontroller 171a, and the microcontroller 171a includes a CPU. The functions provided by the microcontroller 171a can be implemented by software recorded in a tangible memory device and a computer that executes it, by software alone, by hardware alone, or by a combination thereof. For example, when the microcontroller 171a is provided by electronic circuits as hardware, it can be implemented by digital circuits including a large number of logic circuits, or by analog circuits. For example, the microcontroller 171a executes a program stored in a non-transitory tangible storage medium, which serves as its own storage unit. The program includes, for example, programs for the processes shown in FIGS. 24 and 25. When the program is executed, the method corresponding to the program is carried out. The storage unit is, for example, a non-volatile memory. It should be noted that the program stored in the storage unit can be updated via a network such as the Internet, for example.

The motor ECU 171 receives, for example, a commanded torque T* transmitted from the BEV ECU 190, which will be described later. The motor ECU 171 performs switching control of the upper and lower arm switches forming the inverter 170 in order to control the torque of the in-wheel motor 20 to the commanded torque T* or to a limited torque smaller than the commanded torque T*. The upper arm switch and the lower arm switch are alternately turned on with a dead time interposed between them.

The motor ECU 171 performs traction drive control. The traction drive control is the switching control of the inverter 170 for converting the DC power output from the DC power supply 180 into AC power and supplying the AC power to the stator winding 41. When this control is performed, the in-wheel motor 20 functions as an electric motor and generates traction torque. In addition, the motor ECU 171 performs regenerative drive control. The regenerative drive control is the switching control of the inverter 170 for converting the AC power generated by the in-wheel motor 20 into DC power and supplying the DC power to the DC power supply 180. When this control is performed, the in-wheel motor 20 functions as a generator and generates regenerative torque.

The BEV ECU 190 (corresponding to a "higher-level controller") mainly includes a microcomputer 190a, and the microcomputer 190a includes a CPU. In the present embodiment, the BEV ECU 190 corresponds to the higher-level control unit for the motor ECU 171, the brake ECU 202 (described later), and the ADAS ECU 210 (described later). The functions provided by the microcomputer 190a can be implemented by software recorded in a tangible memory device and a computer that executes the software, by software alone, by hardware alone, or by a combination thereof. For example, when the microcomputer 190a is implemented by electronic circuitry as hardware, it can be provided by digital circuits containing numerous logic circuits, or by analog circuits. For example, the microcomputer 190a executes a program stored in its own memory unit. When the program is executed, the method corresponding to the program is carried out. It should be noted that the program stored in the storage unit can be updated via a network such as the Internet, for example.

The vehicle 150 includes a mechanical brake device 200, a brake sensor 201, and a brake ECU 202. The brake device 200 generates braking force by applying frictional force to the wheels that include the tires 13. The brake device 200 includes, for example, a master cylinder and brake pads, which operate in accordance with the depression amount of the brake pedal. The brake sensor 201 detects the brake stroke, which is the depression amount of the brake pedal serving as a brake operation member for the driver. The detection value from the brake sensor 201 is provided to the brake ECU 202.

The brake ECU 202 (corresponding to the "braking force controller") mainly includes a microcontroller 202a, and the microcontroller 202a includes a CPU. The functions provided by the microcontroller 202a can be implemented by software recorded in a tangible memory device and a computer executing that software, by software alone, by hardware alone, or by a combination thereof. For example, when the microcontroller 202a is implemented by electronic circuitry as hardware, it may be provided by digital circuits including logic circuits, or by analog circuits. For example, the microcontroller 202a executes programs stored in its own memory unit. The programs include, for example, programs for braking force control processing of the brake device 200. When the program is executed, the method corresponding to the program is carried out. It should be noted that the program stored in the storage unit can be updated via a network such as the Internet, for example.

The vehicle 150 includes an ADAS ECU 210 (corresponding to a "driving controller"). The ADAS ECU 210 generates a driving plan for the vehicle 150. For example, when accelerating or decelerating the vehicle 150, the ADAS ECU 210 creates a transition plan for the vehicle speed until the target speed is reached, and controls the driving force of the vehicle 150 according to the created plan.

The ADAS ECU 210 mainly includes a microcontroller 210a, and the microcontroller 210a includes a CPU. The functions provided by the microcontroller 210a can be implemented by software recorded on a physical memory device and a computer that executes the software, by software alone, by hardware alone, or by any combination thereof. For example, when the microcontroller 210a is provided by electronic circuits as hardware, it may be implemented by digital circuits containing multiple logic circuits, or by analog circuits. For example, the microcontroller 210a executes programs stored in its own memory unit. The program includes, for example, a program for controlling the driving force of the vehicle 150. When the program is executed, the method corresponding to the program is carried out. It should be noted that the program stored in the storage unit can be updated via a network such as the Internet, for example.

The motor ECU 171, the BEV ECU 190, the brake ECU 202, and the ADAS ECU 210 are capable of exchanging information with each other via the communication bus 300 using a predetermined communication format (for example, CAN).

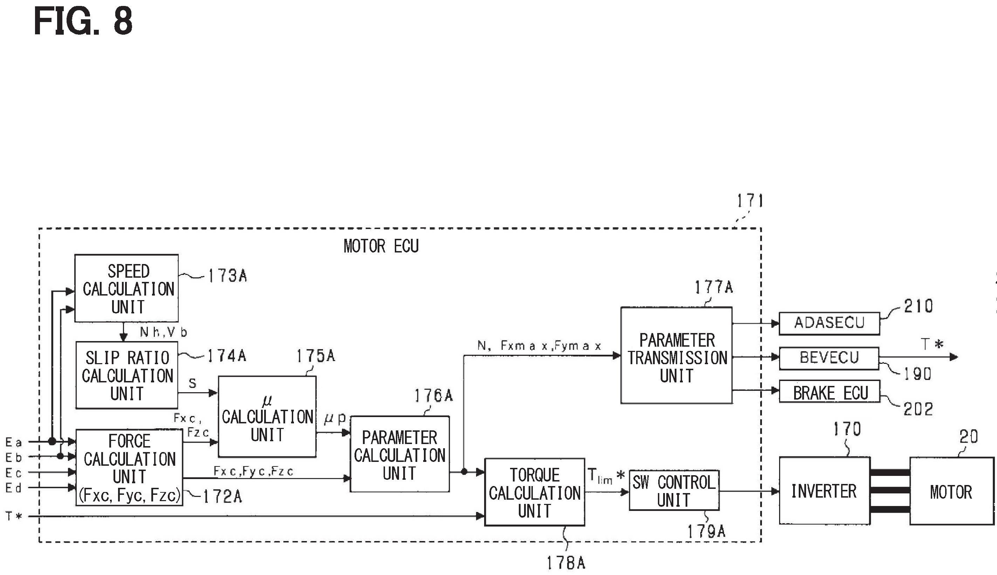

As shown in FIG. 8, the motor ECU 171 includes, as processing units for calculating parameters used in slip suppression control of the vehicle 150, a force calculation unit 172A, a speed calculation unit 173A, a slip ratio calculation unit 174A, a $\mu$ calculation unit 175A, and a parameter calculation unit 176A.

The force calculation unit 172A calculates the lateral force Fyc and the vertical force Fzc acting between the ground surface (ground) GL and the tire 13, based on the output voltage signals from the receiving coils 110A and 120A of the first detection unit 90A.

In addition, the force calculation unit 172A calculates the longitudinal force Fxc based on the output voltage signals from the receiving coils 110B and 120B of the second detection unit 90B. It should be noted that the force calculation unit 172A may also calculate the lateral force Fyc based on the output voltage signals from the receiving coils 110B and 120B of the second detection unit 90B.

A method for calculating the lateral force Fyc and the vertical force Fzc based on the output voltage signals from the receiving coils 110A and 120A will be described with reference to FIG. 1 and FIGS. 9 to 20.

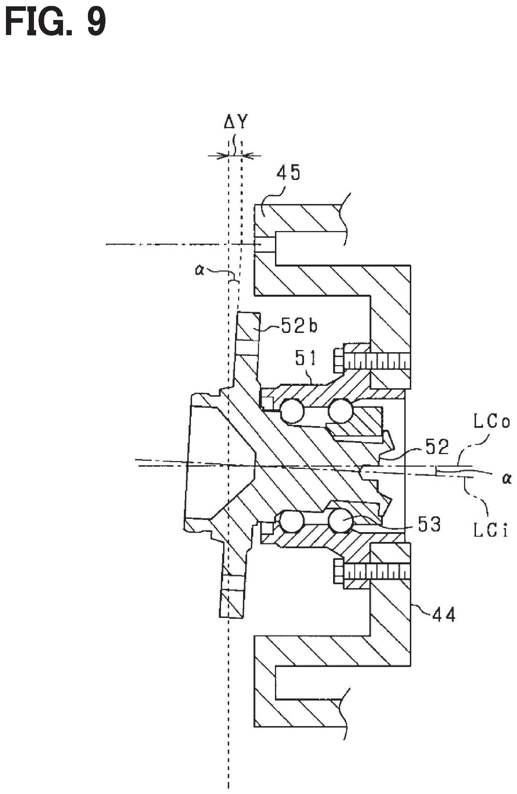

As shown in FIG. 1, when the lateral load Fy acts on the wheel, the tilting angle α of the center axis LCi of the inner ring 52 with respect to the central axis LCo of the outer ring 51 increases, as shown in FIG. 9. In this case, the axial distance between each receiving coil 110A, 120A and the target rotor 80 changes, resulting in a change in the amplitude of the output voltage signals from each receiving coil 110A, 120A. The force calculation unit 172A calculates the axial displacement ΔY of the target rotor 80 based on the amplitude values of the output voltage signals, and calculates the lateral force Fyc based on the calculated axial displacement ΔY.

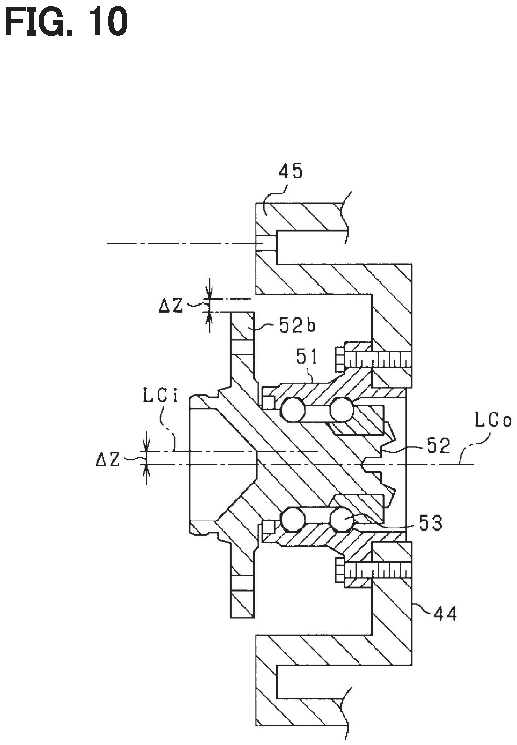

On the other hand, as shown in FIG. 1, when the vertical load Fz acts on the wheel, the center axis LCi of the inner ring 52 is displaced in a direction orthogonal to the central axis LCo of the outer ring 51, as shown in FIG. 10. As a result, the target rotor 80 fixed to the flange portion 52b is also displaced. In this case, the first detection unit 90A is configured such that the amplitude of the output voltage signal from the first large-width receiving coil 120A changes. The force calculation unit 172A calculates the displacement of the target rotor 80 in the direction orthogonal to both the axial direction and the vehicle longitudinal direction (hereinafter referred to as the vertical displacement ΔZ) based on the amplitude values of the output voltage signals from each of the receiving coils 110A and 120A, and calculates the vertical force Fzc based on the calculated vertical displacement ΔZ. The processing for calculating each displacement ΔY, ΔZ, the lateral force Fyc, and the vertical force Fzc, which is executed by the force calculation unit 172A, will be described later.

The following describes the principle by which each displacement ΔY and ΔZ can be detected by the first detection unit 90A and the force calculation unit 172A.

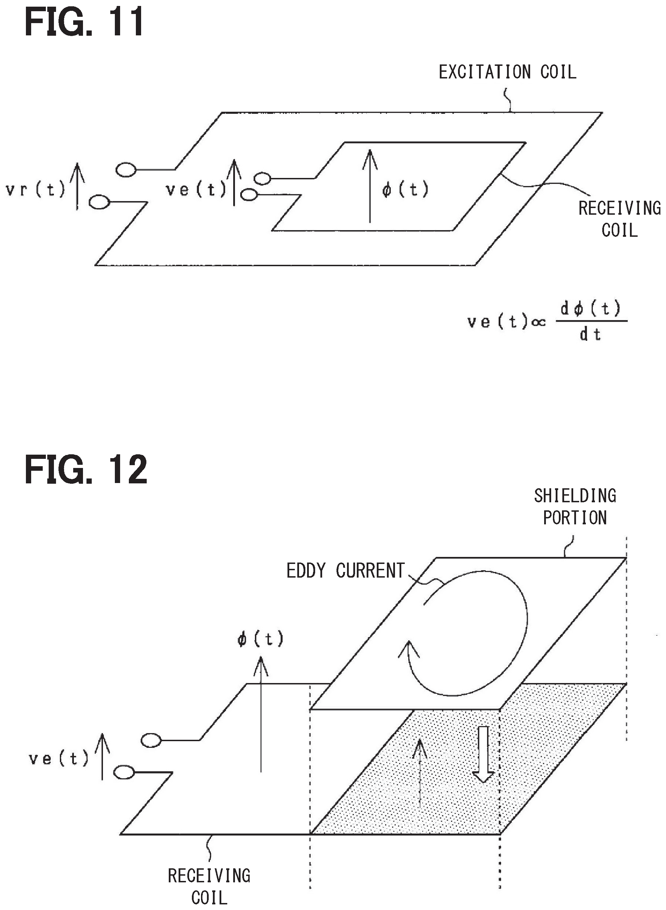

First, an overview of the detection principle for each displacement ΔY and ΔZ will be described with reference to FIGS. 11 and 12. As shown in FIG. 11, when a high-frequency excitation voltage vr(t) is supplied to the excitation coil, a high-frequency current flows through the excitation coil. The current flowing through the excitation coil generates a magnetic flux φ(t), and this magnetic flux φ(t) links with the receiving coil. A voltage ve(t), proportional to the rate of change of the linked magnetic flux over time, is induced across both ends of the receiving coil.

FIG. 12 shows a state in which the shield portion 81 of the target rotor 80 faces a part of the receiving coil in the radial direction. In the section of the shield portion 81 that faces the receiving coil, an eddy current flows due to the linked magnetic flux generated by the excitation coil's energization. The eddy current flowing in the shield portion 81 generates a magnetic flux in a direction that weakens the magnetic flux responsible for inducing voltage in the receiving coil, thereby reducing the amplitude of the induced voltage in the receiving coil. In this case, as the potential difference between both ends of the receiving coil decreases, the amplitude of the output voltage signal from the receiving coil also becomes smaller. In other words, the amplitude of the output voltage signal from the receiving coil is proportional to the area of the receiving coil that does not face the shield portion 81 in the radial direction.

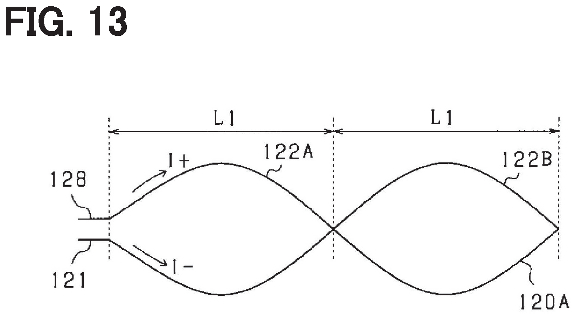

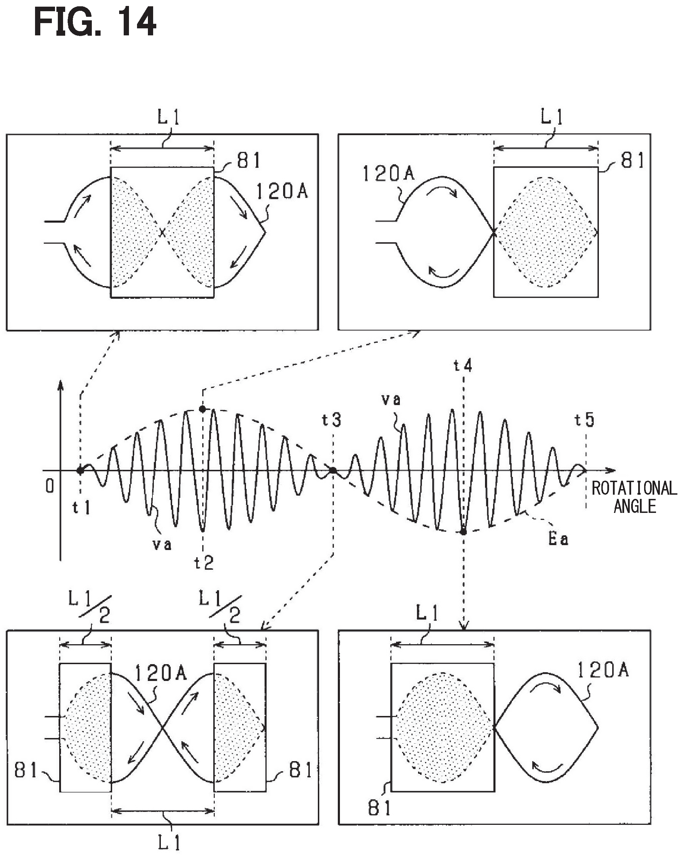

Based on the explanations in FIGS. 11 and 12, the detection principles for each displacement ΔY and ΔZ will be described using FIGS. 13 and 14. FIGS. 13 and 14 are diagrams showing the first large-width receiving coil 120A and the shield portion 81 with the circumferential direction depicted as a straight line. FIG. 14 is a diagram illustrating the relative positional relationship between the first large-width receiving coil 120A and the shield portion 81, as well as the transition of the output voltage signal va from the first large-width receiving coil 120A.

In FIGS. 13 and 14, the direction in which current flows from the second receiving end 128 to the first receiving end 121 is referred to as the positive direction (I+), and the direction in which current flows from the first receiving end 121 to the second receiving end 128 is referred to as the negative direction (I-). Additionally, in FIGS. 13 and 14, the magnetic flux from the first excitation coil 100A passes from the front side of the page to the back side.

At time t1 in FIG. 14, the half of the first portion 122A on the center side and the half of the second portion 122B on the center side are covered by the shield portion 81. A voltage that tends to drive current in the positive direction is induced in the first portion 122A, while a voltage that tends to drive current in the negative direction is induced in the second portion 122B. As a result, the induced voltage generated in the first portion 122A and the induced voltage generated in the second portion 122B cancel each other out, and the amplitude of the output voltage signal va of the first large-width receiving coil 120A becomes zero.

At time t2, the second portion 122B, among the first portion 122A and the second portion 122B, is covered by the shielding portion 81. In this case, a voltage that tends to drive current in the positive direction is induced in the first portion 122A, and the induced voltage in the second portion 122B becomes zero. As a result, the amplitude of the output voltage signal va of the first large-width receiving coil 120A becomes maximum. The amplitude of the output voltage signal va of the first large-width receiving coil 120A increases as the target rotor 80 approaches the first large-width receiving coil 120A.

At time t3, half of the end side of the first portion 122A and half of the end side of the second portion 122B are covered by the shield portion 81. A voltage that tends to drive current in the positive direction is induced in the first portion 122A, while a voltage that tends to drive current in the negative direction is induced in the second portion 122B. As a result, the induced voltage generated in the first portion 122A and the induced voltage generated in the second portion 122B cancel each other out, and the amplitude of the output voltage signal va of the first large-width receiving coil 120A becomes zero.

At time t4, the first portion 122A, among the first portion 122A and the second portion 122B, is covered by the shield portion 81. In this case, a voltage that tends to drive current in the negative direction is induced in the second portion 122B, and the induced voltage in the first portion 122A becomes zero. As a result, the amplitude of the output voltage signal va of the first large-width receiving coil 120A becomes maximum. The amplitude of the output voltage signal va of the first large-width receiving coil 120A increases as the target rotor 80 approaches the first large-width receiving coil 120A.

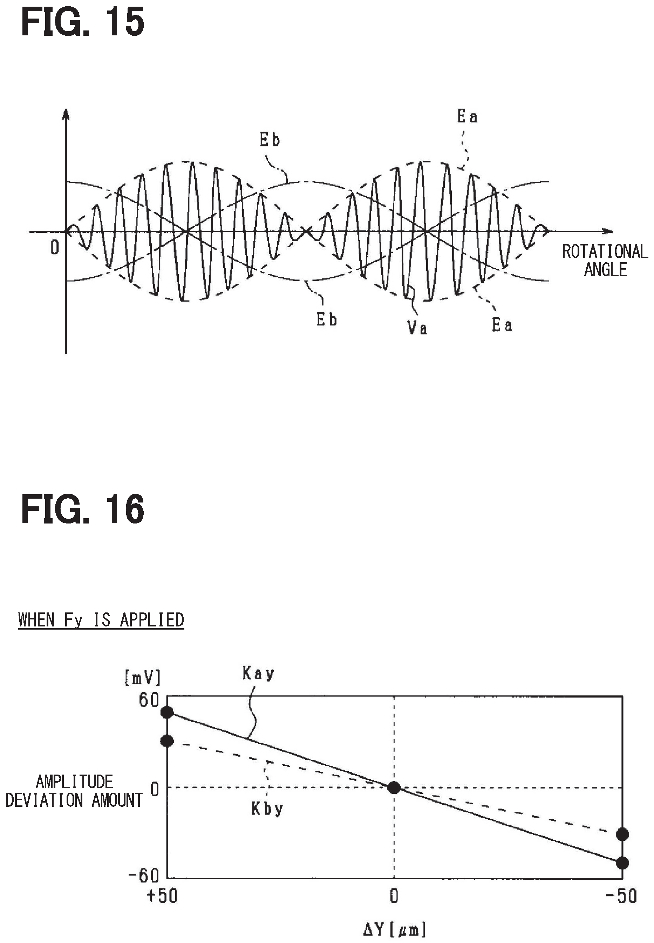

In the present embodiment, the shield portions 81 and the notches 82 are alternately formed at the radially outer end section of the target rotor 80. Therefore, during rotation of the rotor 30, the amplitude of the output voltage signal va of the first large-width receiving coil 120A changes periodically. As indicated by the dashed lines in FIGS. 14 and 15, the envelope Ea of the output voltage signal va of the first large-width receiving coil 120A forms a sine wave shape.

In the present embodiment, when the excitation voltage is supplied to the first excitation coil 100A, the phase difference between the output voltage signal of the first short-width receiving coil 110A and the output voltage signal va of the first large-width receiving coil 120A is 90°. Therefore, as shown by the dashed line and the dash-dotted line in FIG. 15, the phase difference between the envelope Eb of the output voltage signal of the first short-width receiving coil 110A and the envelope Ea of the output voltage signal va of the first large-width receiving coil 120A is 90°. Hereinafter, the envelope Ea of the output voltage signal va of the first large-width receiving coil 120A is referred to as the "sine wave signal," and the envelope Eb of the output voltage signal of the first short-width receiving coil 110A is referred to as the "cosine wave signal."

As shown in FIG. 15, the amplitude of the sine wave signal Ea is larger than the amplitude of the cosine wave signal Eb. This is because, as shown in FIGS. 4(a) and 5, in a plan view of the first substrate 91A, the area enclosed by the first large-width receiving coil 120A is larger than the area enclosed by the first short-width receiving coil 110A.

FIG. 16 shows the relationship between the amplitude values of signals Ea, Eb and the axial displacement ΔY. Here, a case is assumed in which the lateral load Fy varies. The deviation amount of the actual amplitude value of the sine wave signal Ear from the amplitude value of the sine wave signal Eas in the reference state is defined as Kay. In addition, the deviation amount of the actual amplitude value of the cosine wave signal Ebr from the amplitude value of the cosine wave signal Ebs in the reference state is defined as Kby.

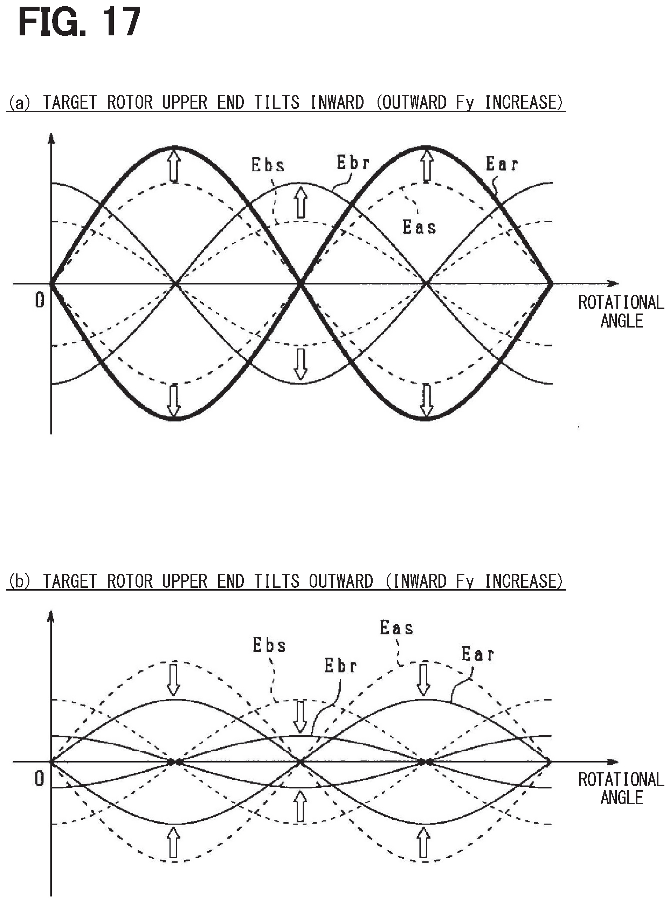

When the direction of the lateral load Fy is outward in the vehicle width direction, the inner ring 52 tilts to the outer ring 51 such that: the upper end section of the target rotor 80 moves closer to the stator base portion 42 side; and the lower end section of the target rotor 80 moves closer to the wheel 10 side. In this case, the polarities of the axial displacement ΔY and each deviation amount Kay and Kby are defined as positive. As the axial displacement ΔY increases in the positive direction, each deviation amount Kay and Kby also increases in the positive direction. This is because, as shown in FIG. 17(a), the closer the target rotor 80 approaches each of the receiving coils 110A and 120A, the greater the amplitude of each actual signal Ear and Ebr becomes relative to each reference signal Eas and Ebs in the reference state.

When the direction of the lateral load Fy is inward in the vehicle width direction, the inner ring 52 tilts to the outer ring 51 such that: the lower end section of the target rotor 80 moves closer to the stator base portion 42 side; and the upper end section of the target rotor 80 moves closer to the wheel 10 side. In this case, the polarities of the axial displacement ΔY and each deviation amount Kay and Kby are defined as negative. As the axial displacement ΔY increases in the negative direction, each deviation amount Kay and Kby also increases in the negative direction. This is because, as shown in FIG. 17(b), the farther the target rotor 80 moves away from each of the receiving coils 110A and 120A, the smaller the amplitude of each actual signal Ear and Ebr becomes relative to each reference signal Eas and Ebs in the reference state. On the other hand, each deviation amount Kay and Kby in the reference state is zero.

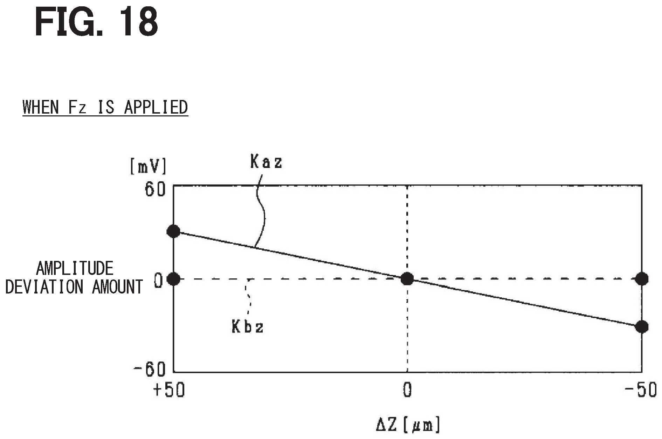

FIG. 18 shows the relationship between the amplitude values of the signals Ea, Eb and the vertical displacement ΔZ. Here, a case is assumed in which the vertical load Fz changes. The deviation amount of the amplitude value of the actual sine wave signal Ear with respect to the amplitude value of the reference sine wave signal Eas in the reference state is defined as Kaz. Similarly, the deviation amount of the amplitude value of the actual cosine wave signal Ebr with respect to the amplitude value of the reference cosine wave signal Ebs in the reference state is defined as Kbz.

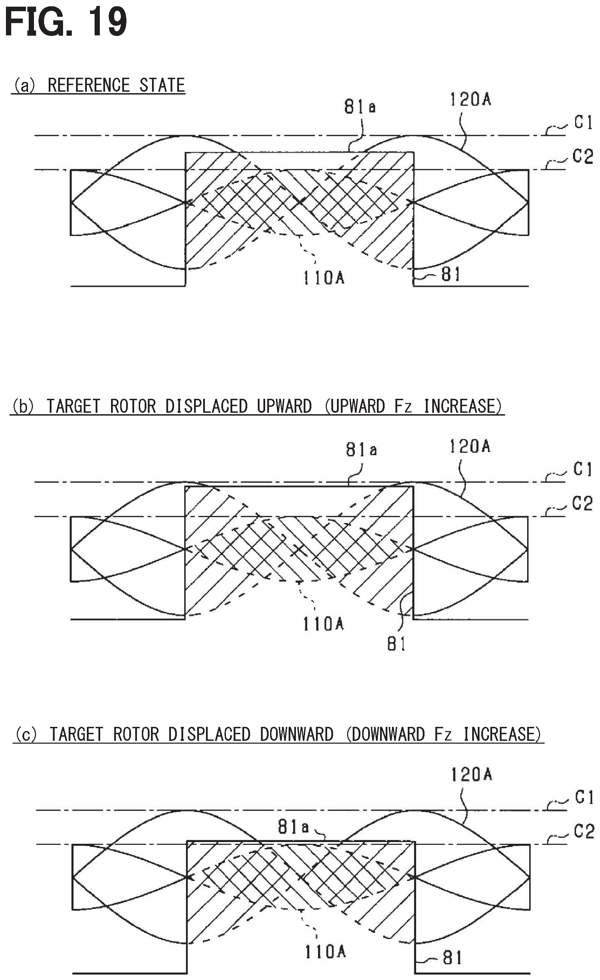

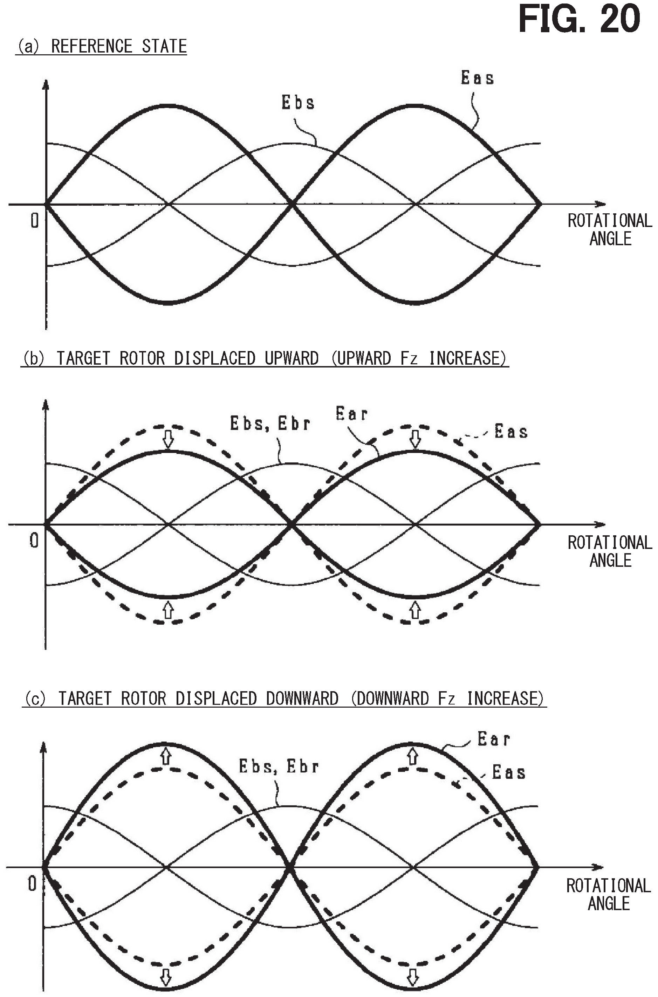

FIG. 19(a) shows the relative positional relationship among each receiving coil 110A, 120A, and the shielding portion 81 in the reference state. FIG. 19 is a diagram in which each receiving coil 110A, 120A and the shielding portion 81 shown in FIGS. 2 and 4, etc., are illustrated with the circumferential direction represented linearly. In the drawing, the portions indicated by hatching represent the parts of each receiving coil 110A and 120A that are covered by the shielding portion 81. FIG. 20(a) shows the transitions of signals Eas and Ebs in the reference state.

When the upward vertical load Fz increases, the upper end section of the target rotor 80 is displaced upward. In this case, the vertical displacement ΔZ and the polarity of each deviation amount Kaz and Kbz are defined as negative in FIG. 18. As the vertical displacement ΔZ increases in the negative direction, the deviation amount Kaz of the amplitude value of the sine wave signal Ea increases in the negative direction. This is because, as shown in FIG. 19(b), the area of the first large-width receiver coil 120A covered by the shielding portion 81 increases as the target rotor 80 is displaced upward. In this case, as shown in FIG. 20(b), the amplitude of the actual sine wave signal Ear becomes smaller than that of the reference sine wave signal Eas.

When the downward vertical load Fz increases, the upper end of the target rotor 80 is displaced downward. In FIG. 18, the polarities of the vertical displacement ΔZ and each deviation amount Kaz and Kbz in this case are defined as positive. As the vertical displacement ΔZ increases in the positive direction, the deviation amount Kaz of the amplitude value of the sine wave signal Ea also increases in the positive direction. This is because, as shown in FIG. 19(c), the more the target rotor 80 is displaced downward, the smaller the area of the first large-width receiving coil 120A that is covered by the shielding portion 81 becomes. In this case, as shown in FIG. 20(c), the amplitude of the actual sine wave signal Ear becomes larger than that of the reference sine wave signal Eas.

As shown in FIG. 18, the deviation amount Kbz of the amplitude value of the cosine wave signal Eb does not change with respect to the vertical displacement $\Delta Z$. This is because, as shown in FIGS. 19(a) to (c), even if the target rotor 80 is displaced, the area of the first short-width receiving coil 110A covered by the shielding portion 81 does not change. In this case, as shown in FIGS. 20(a) to (c), even if the target rotor 80 is displaced in the vertical direction, the amplitude value of the actual cosine wave signal Ebr becomes equal to the amplitude value of the reference cosine wave signal Ebs.

The slope of the deviation amount Kaz of the amplitude value of the sine wave signal Ea with respect to the vertical displacement $\Delta Z$ is smaller than the slope of the deviation amount Kay of the amplitude value of the sine wave signal Ea with respect to the axial displacement $\Delta Y$. Furthermore, the slope of the deviation amount Kbz of the amplitude value of the cosine wave signal Eb with respect to the vertical displacement $\Delta Z$ is smaller than the slope of the deviation amount Kby of the amplitude value of the cosine wave signal Eb with respect to the axial displacement $\Delta Y$. This is due, for example, to the fact that the vertical rigidity of a wheel is greater than its lateral rigidity.

From the above, the force calculation unit 172A is capable of calculating the axial displacement $\Delta Y$ and the vertical displacement $\Delta Z$ based on the amplitude values A and B of input signals Ea and Eb. Furthermore, the force calculation unit 172A is capable of calculating the lateral force Fyc based on the calculated axial displacement $\Delta Y$. The force calculation unit 172A is capable of calculating the vertical force Fzc based on the calculated vertical displacement $\Delta Z$.

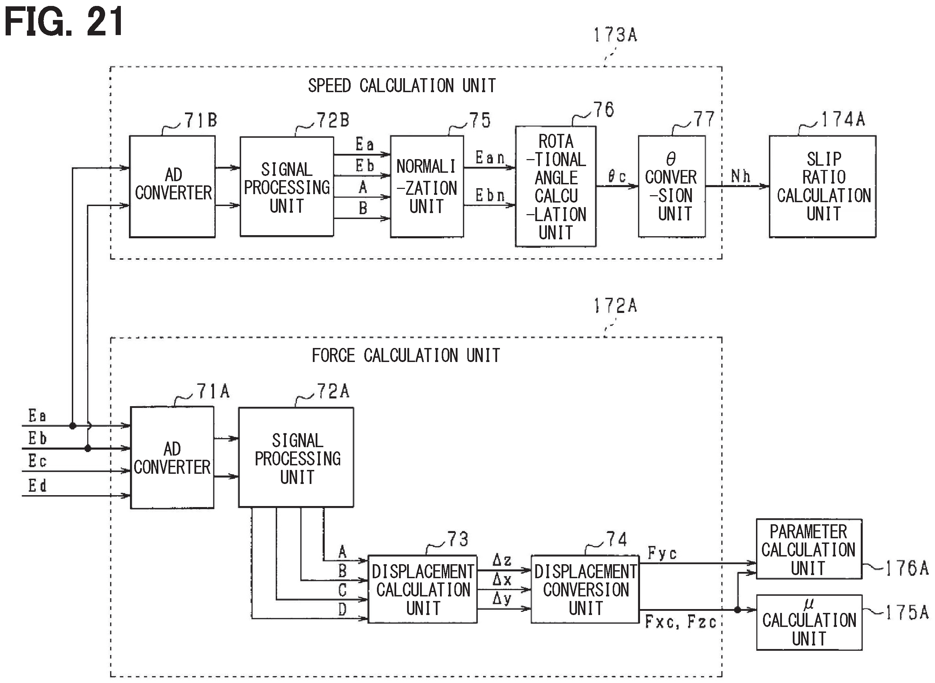

The following provides a detailed explanation of the processing performed by the force calculation unit 172A, with reference to FIG. 6 and FIG. 21.

The first receiving circuit 95A includes an envelope detection circuit that detects the envelope of the output voltage signals from each of the receiving coils 110A and 120A. The first receiving circuit 95A generates a sine wave signal Ea based on the detected output voltage signal of the first large-width receiving coil 120A. The first receiving circuit 95A generates a cosine wave signal Eb based on the detected output voltage signal of the first short-width receiving coil 110A.

The force calculation unit 172A includes a first AD converter 71A and a first signal processing unit 72A. The sine wave signal Ea and the cosine wave signal Eb, which are analog signals, are provided to the first AD converter 71A from the first receiving circuit 95A. The first AD converter 71A converts the signals Ea and Eb into digital signals. The signals Ea and Eb, which have been converted into digital signals, are provided to the first signal processing unit 72A.

The first signal processing unit 72A acquires the amplitude value A of the sine wave signal Ea and the amplitude value B of the cosine wave signal Eb.

The force calculation unit 172A includes a displacement calculation unit 73 and a displacement conversion unit 74. The amplitude values A and B acquired by the first signal processing unit 72A are provided to the displacement calculation unit 73. The displacement calculation unit 73 calculates the axial displacement $\Delta Y$ and the vertical displacement $\Delta Z$ based on the input amplitude values A and B. For example, the displacement calculation unit 73 calculates the axial displacement $\Delta Y$ and the vertical displacement $\Delta Z$ based on the deviation amounts of the input amplitude values A and B with respect to the amplitude values in the reference state, and the deviation amounts of amplitude values A and B with respect to the amplitude values in the reference state, using map information or formula information that relates the axial displacement $\Delta Y$ and the vertical displacement $\Delta Z$ to these deviation amounts.

The displacements $\Delta Y$ and $\Delta Z$ calculated by the displacement calculation unit 73 are provided to the displacement conversion unit 74. The displacement conversion unit 74 calculates the lateral force Fyc based on the input axial displacement $\Delta Y$. For example, the displacement conversion unit 74 calculates the lateral force Fyc based on the input axial displacement $\Delta Y$ and on map information or formula information that relates the axial displacement $\Delta Y$ and the lateral load Fy. The displacement conversion unit 74 calculates the vertical force Fzc based on the input vertical displacement $\Delta Z$. For example, the displacement conversion unit 74 calculates the vertical force Fzc based on the input vertical displacement $\Delta Z$ and on map information or formula information that relates the vertical displacement $\Delta Z$ and the vertical load Fz. The calculated lateral force Fyc is provided to the parameter calculation unit 176A, and the calculated vertical force Fzc is provided to both the $\mu$ calculation unit 175A and the parameter calculation unit 176A.

Next, a method for calculating the longitudinal force Fxc based on the output voltage signals from the receiving coils 110B and 120B will be described. The following describes, by way of example, the case where the second coil unit 92B is provided at a position facing the vehicle front end of the peripheral portion of the target rotor 80 and in the vehicle width direction.

The longitudinal load Fx is defined as positive when the vehicle is accelerating, and negative when the vehicle is decelerating. When the longitudinal load Fx is positive, the shielding portion 81 is displaced toward the vehicle traveling direction. This state corresponds to a condition in the first embodiment where the upward vertical load Fz acting on the wheel increases. On the other hand, when the longitudinal load Fx is negative, the shielding portion 81 is displaced in the direction opposite to the vehicle traveling direction. This state corresponds to a condition in the first embodiment where the downward vertical load Fz acting on the wheel increases.

The second receiving circuit 95B includes an envelope detection circuit that detects the envelope of the output voltage signals from each of the receiving coils 110B and 120B. The second receiving circuit 95B generates a sine wave signal Ec based on the output voltage signal detected from the second large-width receiving coil 120B. The second receiving circuit 95B generates a cosine wave signal Ed based on the output voltage signal detected from the second short-width receiving coil 110B. When the longitudinal load Fx acts on the wheel, the amplitude of the output voltage signal in each receiving coil of the second coil unit 92B changes.

The first signal processing unit 72A acquires the amplitude value C of the sine wave signal Ec, as well as the amplitude value D of the cosine wave signal Ed. The displacement calculation unit 73 receives, as inputs, the respective amplitude values C and D acquired by the first signal processing unit 72A. The displacement calculation unit 73 calculates the longitudinal displacement $\Delta X$ of the target rotor 80 based on the input amplitude values C and D. Furthermore, the displacement conversion unit 74 calculates the longitudinal force Fxc based on the calculated longitudinal displacement $\Delta X$. The calculated longitudinal force Fxc is provided to the $\mu$ calculation unit 175A and the parameter calculation unit 176A. It should be noted that the displacement calculation unit 73 can also calculate the axial displacement $\Delta Y$ of the target rotor 80 based on the input amplitude values C and D.

Returning to the explanation of FIG. 8, the speed calculation unit 173A calculates the rotational angle $\theta$ (specifically, the electrical angle or mechanical angle) of the rotor 30 of the in-wheel motor 20, the wheel speed Nh of the tire 13, and the vehicle body speed Vb of the vehicle 150, based on the output voltage signals from the receiving coils 110A and 120A. In the present embodiment, for example, by correlating the circumferential spacing of the magnetic pole positions of the magnet unit 32 with the circumferential lengths of the shielding portion 81 and the notch 82, it is possible to associate the amplitude or envelope with the rotational angle $\theta$.

The following provides a detailed explanation of the processing performed by the speed calculation unit 173A, with reference to FIG. 21. The speed calculation unit 173A includes a second AD converter 71B, a second signal processing unit 72B, a normalization unit 75, a rotational angle calculation unit 76, and a $\theta$ conversion unit 77. Similar to the force calculation unit 172A, the speed calculation unit 173A acquires amplitude values A and B from the sine wave signal Ea and the cosine wave signal Eb provided from the first receiving circuit 95A, and provides the sine wave signal Ea, cosine wave signal Eb, and amplitude values A and B to the normalization unit 75. It should be noted that the AD converters (specifically, the first AD converter 71A and the second AD converter 71B) may be shared between the force calculation unit 172A and the speed calculation unit 173A. Additionally, the signal processing units (specifically, the first signal processing unit 72A and the second signal processing unit 72B) may also be shared between the force calculation unit 172A and the speed calculation unit 173A.

In the speed calculation unit 173A, the normalization unit 75 calculates a normalized sine wave signal Ean by dividing the input sine wave signal Ea by the amplitude value A. In addition, the normalization unit 75 calculates a normalized cosine wave signal Ebn by dividing the input cosine wave signal Eb by the amplitude value B. Each normalized signal Ean and Ebn is a signal with an amplitude value of 1.

The rotational angle calculation unit 76 receives normalized signals Ean and Ebn, which have been normalized by the normalization unit 75. The rotational angle calculation unit 76 calculates the rotational angle $\theta c$ based on the normalized signals Ean and Ebn. For example, the rotational angle calculation unit 76 calculates the rotational angle $\theta c$ (electrical angle) by performing an arctangent operation on the ratio of the normalized sine wave signal Ean to the normalized cosine wave signal Ebn. The calculated rotational angle $\theta c$ is provided to the $\theta$ conversion unit 77.

The $\theta$ conversion unit 77 calculates the wheel speed Nh, which is the rotational speed of the wheel, based on the time derivative of the rotational angle $\theta c$. It is also possible to calculate the wheel speed Nh based on the sine wave signal Ec and the cosine wave signal Ed provided from the second receiving circuit 95B. In addition, the $\theta$ conversion unit 77 calculates the vehicle body speed Vb of the vehicle 150 based on the wheel speed Nh. The $\theta$ conversion unit 77 outputs the calculated wheel speed Nh and vehicle body speed Vb to the slip ratio calculation unit 174A.

The slip ratio calculation unit 174A calculates the slip ratio S based on the input wheel speed Nh and vehicle body speed Vb. The slip ratio S can be calculated by a known method, for example, by the following equation (eq1).

$$\text{Slip ratio} = (Vb - Nh) / Vb \qquad (eq1)$$

The slip ratio S calculated by the slip ratio calculation unit 174A is provided to the $\mu$ calculation unit 175A. The $\mu$ calculation unit 175A calculates the peak of the friction coefficient $\mu$, which is a coefficient (for example, a proportional coefficient) indicating the relationship between the longitudinal load Fx acting on the tire 13 and the vertical load Fz.

The $\mu$ calculation unit 175A calculates the $\mu$ peak value $\mu p$ based on the slip ratio S, the longitudinal force Fxc, and the vertical force Fzc. The $\mu$ peak value $\mu p$ is the value of the friction coefficient $\mu$ that initially reaches a maximum when the slip ratio S is increased. First, the $\mu$ calculation unit 175A calculates the friction coefficient $\mu$ based on the longitudinal force Fxc and the vertical force Fzc according to the following equation (eq2).

$$\mu = Fxc / Fzc \qquad\qquad (eq2)$$

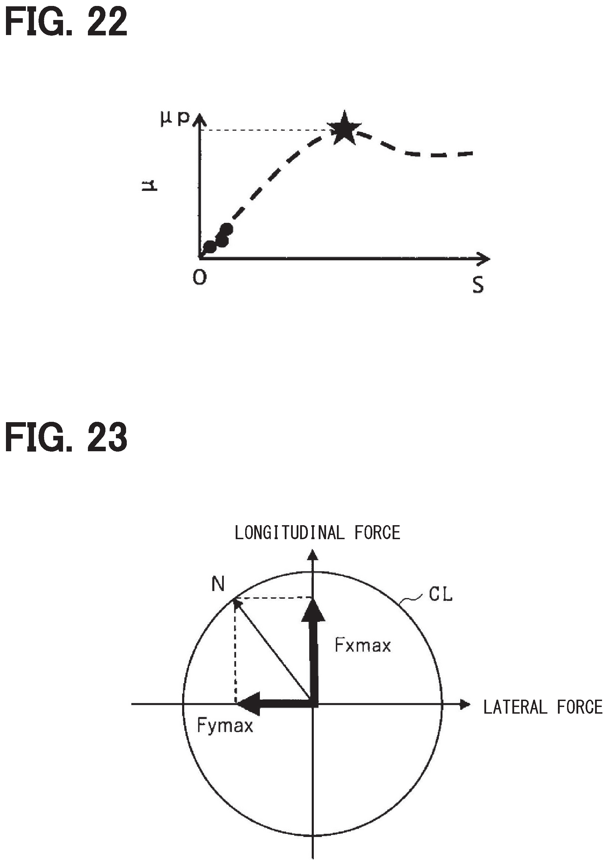

Next, the $\mu$ calculation unit 175A calculates the $\mu$ peak value $\mu$p based on the slip ratio S and the friction coefficient $\mu$ calculated according to the above equation (eq2). For example, as shown in FIG. 22, the $\mu$ calculation unit 175A plots the slip ratio and the friction coefficient $\mu$ on two-dimensional coordinates and calculates the $\mu$ peak value $\mu$p based on the relationship between the plotted slip ratio and friction coefficient $\mu$.

The $\mu$ peak value $\mu$p calculated by the $\mu$ calculation unit 175A is provided to the parameter calculation unit 176A. The parameter calculation unit 176A calculates the allowable upper limit resultant force N based on the $\mu$ peak value $\mu$p and the vertical force Fzc. The allowable upper limit resultant force N is a value that enables the tire 13 to be rotationally driven without slipping. Specifically, it is a value calculated to ensure that the resultant force of the lateral force Fyc and the longitudinal force Fxc does not exceed the friction circle of the tire 13. In other words, by keeping the resultant force of the lateral force Fyc and the longitudinal force Fxc at or below the allowable upper limit resultant force N, slippage of the tire 13 can be suppressed. Hereinafter, the allowable upper limit value of the lateral force Fyc acting on the tire 13 will be referred to as the "lateral force allowable value Fymax," and the allowable upper limit value of the longitudinal force Fxc acting on the tire 13 will be referred to as the "longitudinal force allowable value Fxmax."

The parameter calculation unit 176A calculates the allowable upper limit resultant force N based on the following equation (eq3).

$$N = \mu p \times Fzc \qquad\qquad (eq3)$$

As expressed by the following equation (eq4), the ratio of the lateral force Fyc to the longitudinal force Fxc is equal to the ratio of the lateral force allowable value Fymax to the longitudinal force allowable value Fxmax. By rearranging the following equation (eq4), the following equation (eq5) is obtained. The allowable upper limit resultant force N is expressed by the following equation (eq6), and by rearranging equation (eq6), the following equation (eq7) is obtained. The parameter calculation unit 176A calculates the lateral force allowable value Fymax and the longitudinal force allowable value Fxmax based on the longitudinal force Fxc, the lateral force Fyc, the allowable upper limit resultant force N, equation (eq5), and equation (eq7).

[Equation 1]

$$Fxc : Fyc = Fxmax : Fymax \qquad (eq4)$$

$$Fxmax = \frac{Fymax \times Fxc}{Fyc} \qquad (eq5)$$

$$N = \sqrt{Fxmax^2 + Fymax^2} \qquad (eq6)$$

$$Fymax^2 = N^2 - Fxmax^2 \qquad (eq7)$$

Generally, when braking a wheel, a state in which the wheel slips to some extent yields higher braking force than a state in which the wheel does not slip at all. The $\mu$ peak value $\mu$p indicates the coefficient of friction $\mu$ at which braking force can be applied to the tire 13 while suppressing slip of the tire 13. Therefore, the allowable upper limit resultant force N, calculated based on the $\mu$ peak value $\mu$p and the vertical load Fz acting on the tire 13, exists on the friction circle CL of the tire 13. The friction circle CL is decomposed into a lateral force allowable value Fymax and a longitudinal force allowable value Fxmax. Based on at least one of the obtained lateral force allowable value Fymax and longitudinal force allowable value Fxmax, by driving the tire 13, it is possible to drive the tire 13 while suppressing slip of the tire 13. The relationship among the lateral force allowable value Fymax, the longitudinal force allowable value Fxmax, the allowable upper limit resultant force N, and the friction circle CL is shown in FIG. 23.

The motor ECU 171 includes a parameter transmission unit 177A (corresponding to the "parameter communication unit"), which transmits the values calculated by the parameter calculation unit 176A to other ECUs. The parameter calculation unit 176A transmits the calculated parameters, namely the allowable upper limit resultant force N, the allowable lateral force Fymax, and the allowable longitudinal force Fxmax, to the parameter transmission unit 177A. The parameter transmission unit 177A transmits the parameters to the brake ECU 202, the ADAS ECU 210, and the BEV ECU 190.

The brake ECU 202 calculates the requested regenerative braking torque based on the regenerative braking torque receivable from the BEV ECU 190 and the total braking torque. When the parameter transmission unit 177A transmits the parameters to the BEV ECU 190, the BEV ECU 190 can calculate the regenerative braking torque receivable by reflecting the values of the parameters. Furthermore, when the parameter transmission unit 177A transmits the parameters to the brake ECU 202, the brake ECU 202 can calculate the requested regenerative braking torque by reflecting the values of the parameters. As a result, it is possible to perform braking control of the wheels by regeneration, reflecting the forces acting on the tire 13.

When the parameter transmission unit 177A transmits the parameters to the ADAS ECU 210, the ADAS ECU 210 can ascertain the forces acting on the tire 13 based on the parameters and, for example, recognize that the vehicle is in a state where it cannot achieve the ideal acceleration with respect to the commanded torque T*. Therefore, the ADAS ECU 210 creates an acceleration plan for the vehicle based on having ascertained the forces acting on the tire 13. As a result, the vehicle, when driven according to the acceleration plan created by the ADAS ECU 210, does not exhibit unexpected behavior for the driver, and it is possible to suppress wheel slip while maintaining good ride comfort.

The motor ECU 171 includes a torque calculation unit 178A and a switch control unit 179A. The parameter calculation unit 176A outputs the calculated allowable upper limit resultant force N, the allowable longitudinal force value Fxmax, and the allowable lateral force value Fymax to the torque calculation unit 178A. The torque calculation unit 178A calculates the control torque Tlim* for the in-wheel motor 20 based on the parameters calculated by the parameter calculation unit 176A. The switch control unit 179A returns the torque of the in-wheel motor 20 to the control torque Tlim*.

The torque calculation unit 178A acquires the allowable longitudinal force value Fxmax output by the parameter calculation unit 176A and the commanded torque T* transmitted by the BEV ECU 190. The torque calculation unit 178A calculates the allowable torque Tper, which is the value obtained by multiplying the allowable longitudinal force value Fxmax by the radius r of the tire 13.

The torque calculation unit 178A calculates the control torque Tlim* based on a comparison between the commanded torque T* and the allowable torque Tper. The torque calculation unit 178A sets the control torque Tlim* to the commanded torque T* when the torque calculation unit 178A determines that the commanded torque T* is less than or equal to the allowable torque Tper. The torque calculation unit 178A sets the control torque Tlim* to a restricted torque value that is smaller than the commanded torque T* when the torque calculation unit 178A determines that the commanded torque T* is greater than the allowable torque Tper.

The torque calculation unit 178A calculates the restricted torque as a value (K × Tper) obtained by multiplying the allowable torque Tper by a coefficient K. Here, the coefficient K is a value that is greater than or equal to 0 and less than 1. The torque calculation unit 178A outputs the control torque Tlim* to the switch control unit 179A. The switch control unit 179A performs switching control of the inverter 170 in order to control the torque of the in-wheel motor 20 to the control torque Tlim*.

The procedure of slip suppression control performed by the motor ECU 171 will be explained with reference to FIG. 24. This process is repeatedly executed at a predetermined control cycle. It should be noted that the calculation methods in each of the following steps are the same as those described with reference to FIG. 8 and the like.

In step S10, the output voltage signals from the receiving coils 110A and 120A of the first detection unit 90A are acquired, and based on the acquired output voltage signals, the wheel speed Nh of the tire 13 and the vehicle body speed Vb of the vehicle 150 are calculated. Based on the calculated wheel speed Nh and vehicle body speed Vb, the slip ratio S is calculated. In step S11, the longitudinal force Fxc, the lateral force Fyc, and the vertical force Fzc are calculated. In the present embodiment, the processing in step S11 corresponds to the "force calculation unit."

In step S12, the peak value $\mu p$ of the friction coefficient $\mu$ is calculated, and in step S13, the allowable upper limit resultant force N, the allowable lateral force value Fymax, and the allowable longitudinal force value Fxmax are calculated. In the present embodiment, the processing in step S13 corresponds to the "parameter calculation unit." In step S14, the parameters calculated in step S13 are transmitted to the brake ECU 202, the ADAS ECU 210, and the BEV ECU 190.

In step S15, the control torque Tlim* is calculated. In step S16, switching control of the inverter 170 is performed in order to feedback-control the torque of the in-wheel motor 20 to the control torque Tlim*.

FIG. 25 illustrates the processing procedure of step S15.

In step S17, the allowable longitudinal force value Fxmax calculated in step S13 is acquired. In step S18, the commanded torque T* is acquired from the BEV ECU 190.

In step S19, the allowable torque Tper is calculated based on the allowable longitudinal force value Fxmax, and the allowable torque Tper is compared with the commanded torque T*. If it is determined that the commanded torque T* is less than or equal to the allowable torque Tper, the process proceeds to step S20, and the control torque Tlim* is set to the commanded torque T*. Determining in step S19 that the commanded torque T* is less than or equal to the allowable torque Tper is equivalent to determining that the combined lateral and longitudinal forces do not exceed the friction circle CL of the tire 13. It should be noted that the process in step S19 corresponds to the "determination unit."

If it is determined in step S19 that the commanded torque T* is greater than the allowable torque Tper, the process proceeds to step S21, and the control torque Tlim* is set to the limit torque (K × Tper). Determining in step S19 that the commanded torque T* is greater than the allowable torque Tper is equivalent to determining that the combined lateral and longitudinal forces exceed the friction circle CL of the tire 13.

Following the computation of the control torque Tlim*, feedback control is executed in step S16, whereby the in-wheel motor 20 is driven in accordance with the control torque Tlim*. Here, if the commanded torque T* is equal to or greater than the allowable torque Tper and the tire 13 is driven based on the commanded torque T*, there is a possibility that the tire 13 will slip. Therefore, when the commanded torque T* is equal to or greater than the allowable torque Tper, driving the tire 13 with a limit torque smaller than the commanded torque T* makes it possible to suppress slipping of the tire 13.

The control cycle of the motor ECU 171 is shorter than the control cycle of the brake ECU 202. Specifically, since the in-wheel motor 20 has higher responsiveness than the brake device 200, for example, the control cycle of the motor ECU 171 is less than 1/20 of the control cycle of the brake ECU 202. As shown in this embodiment, by calculating the force acting on the tire 13 using the motor ECU 171, which is a control unit with a shorter control cycle, it is possible to appropriately grasp the condition of the road surface on which the vehicle is traveling and suppress slipping of the tire 13.

(Modification of the First Embodiment)

The motor ECU 171 may not be provided with the slip ratio calculation unit 174A and the μ calculation unit 175A. In this case, for example, at least one of the BEV ECU 190, the brake ECU 202, and the ADAS ECU 210 may include the slip ratio calculation unit 174A and the μ calculation unit 175A.

The parameter transmission unit 177A does not need to transmit all of the allowable upper limit resultant force N, the allowable lateral force Fymax, and the allowable longitudinal force Fxmax to the brake ECU 202, the ADAS ECU 210, and the BEV ECU 190. In this case, the parameter transmission unit 177A may transmit one or two of the allowable upper limit resultant force N, the allowable lateral force Fymax, and the allowable longitudinal force Fxmax to the brake ECU 202, the ADAS ECU 210, and the BEV ECU 190.

The parameter transmission unit 177A does not need to transmit the parameters to all of the brake ECU 202, the ADAS ECU 210, and the BEV ECU 190. In this case, the parameter transmission unit 177A may transmit the parameters to one or two of the brake ECU 202, the ADAS ECU 210, and the BEV ECU 190.

(Second Embodiment)

The following describes the second embodiment, focusing on the differences from the first embodiment, with reference to the drawings.

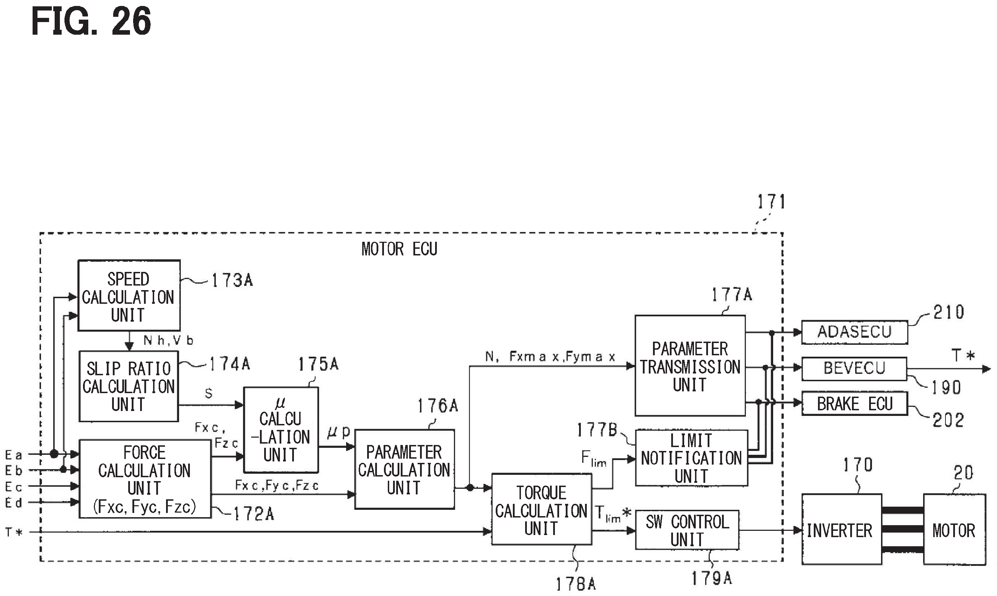

As shown in FIG. 26, the motor ECU 171 is provided, in addition to the configuration of the first embodiment, with a limit notification unit 177B. The torque calculation unit 178A outputs torque limitation information Flim (corresponding to the "comparison result"), which indicates whether torque limitation has been executed, to the limit notification unit 177B. The limit notification unit 177B transmits parameters to the brake ECU 202, the ADAS ECU 210, and the BEV ECU 190.

When the motor ECU 171 determines that the commanded torque T* is equal to or less than the allowable torque Tper, the motor ECU 171 sets the torque limitation information Flim to 1. On the other hand, when the motor ECU 171 determines that the commanded torque T* is greater than the allowable torque Tper, the motor ECU 171 sets the torque limitation information Flim to 0. In other words, the torque limitation information Flim is a binary signal. In the present embodiment, a value of 1 indicates that torque limitation is not being performed, and a value of 0 indicates that torque limitation is being applied. The limit notification unit 177B notifies the BEV ECU 190, which is the controller that transmits the commanded torque T*, of the acquired torque limitation information Flim.

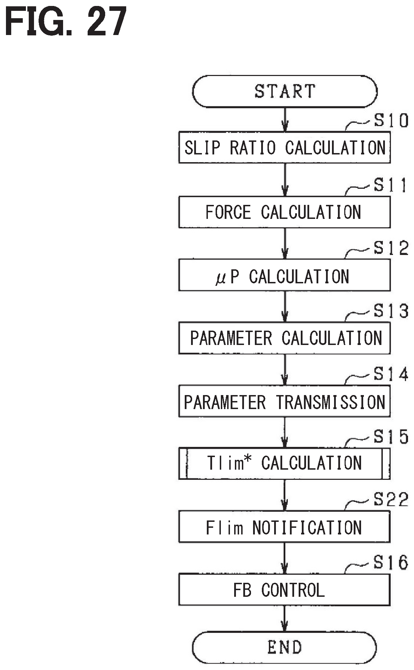

Subsequently, the slip suppression control performed by the motor ECU 171 will be described with reference to FIG. 27. The processing shown in FIG. 27 is repeatedly executed, for example, at a predetermined control interval.

In the present embodiment, the torque limitation information Flim is calculated in the process of calculating the control torque Tlim* in step S15. After the completion of the processing in step S15, in step S22, the torque limitation information Flim is transmitted to the BEV ECU 190.

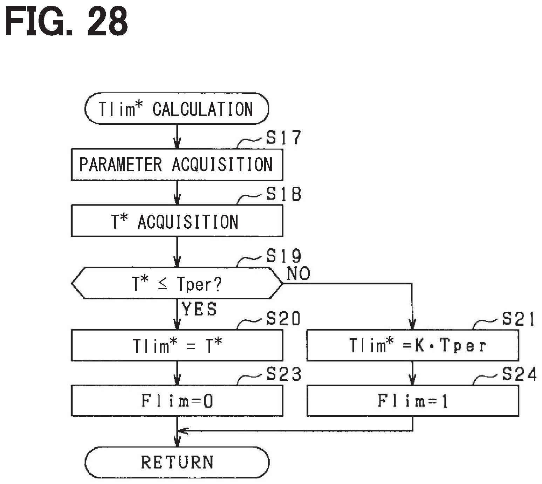

The processing of step S15 will be described with reference to FIG. 28. After the completion of the processing in step S20, in step S23, the torque limitation information Flim is set to zero. On the other hand, after the completion of the processing in step S21, in step S24, the torque limitation information Flim is set to 1.

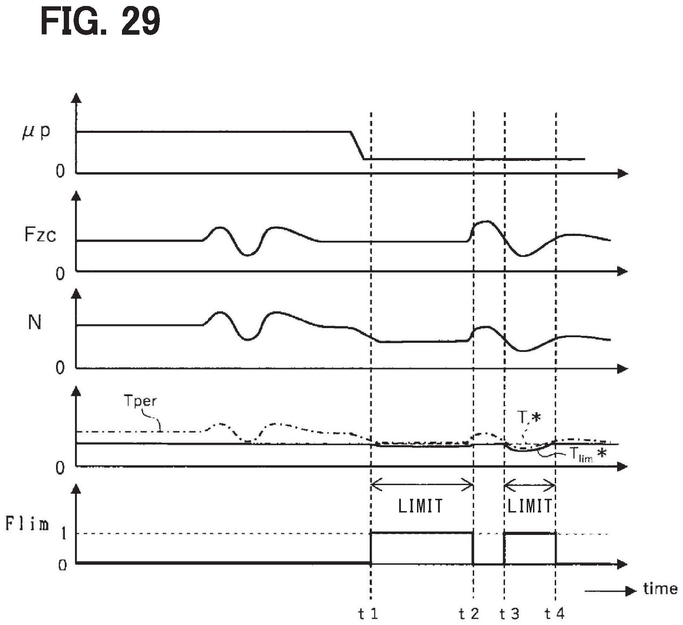

Next, with reference to FIG. 29, the transitions of the μ peak value μp, vertical force Fzc, allowable upper limit resultant force N, allowable torque Tper, commanded torque T*, control torque Tlim*, and torque limitation information Flim will be described. In the following explanation, for convenience, the lateral load Fy and the longitudinal load Fx are assumed to be constant. The allowable upper limit resultant force N is a value calculated based on the μ peak value μp and the vertical force Fzc, and the allowable torque Tper is a value calculated based on the allowable upper limit resultant force N. Therefore, the allowable upper limit resultant force N and the allowable torque Tper vary in conjunction with the μ peak value μp and the vertical force Fzc.

The commanded torque T* remains constant throughout the entire period shown in FIG. 29. Here, due to some factor, the μ peak value μp decreases before time t1. As a result, the allowable torque Tper decreases, and the commanded torque T* becomes greater than the allowable torque Tper. As a result, at time t1, the motor ECU 171 sets the control torque Tlim* to a restricted torque (K × Tper) that is smaller than the commanded torque T*.

At time t2, it is determined that the commanded torque T* has become equal to or less than the allowable torque Tper. Therefore, the limitation control of the commanded torque T* by the motor ECU 171 is released, and the torque of the in-wheel motor 20 is controlled according to the commanded torque T*. In other words, torque limitation control by the motor ECU 171 is executed during the period from time t1 to time t2. Similarly, torque limitation control is also executed during the period from time t3 to time t4.

During the periods t1-t2 and t3-t4 when torque limitation control by the motor ECU 171 is being executed, the value of the torque limit information Flim is set to 1.

Here, since the BEV ECU 190, which transmits the commanded torque T*, and the motor ECU 171 are different controllers, it is necessary to make the higher-level controller, BEV ECU 190, aware that torque limit control is being executed.

If the BEV ECU 190 cannot recognize that torque limitation control is being executed, there is a concern that the BEV ECU 190 may determine that the torque of the in-wheel motor 20 is insufficient relative to the commanded torque T* and increase the commanded torque T*. In addition, there is a concern that the BEV ECU 190 may determine that the motor ECU 171 has a fault and output an error signal to at least one of the ADAS ECU 210 and the brake ECU 202.

Therefore, the motor ECU 171 notifies the BEV ECU 190 that torque limit control has been executed. As a result, it is possible to suppress the BEV ECU 190 from outputting an error or increasing the commanded torque T*.

(Third Embodiment)

The third embodiment will be described below, focusing on the differences from the first and second embodiments, with reference to the drawings.

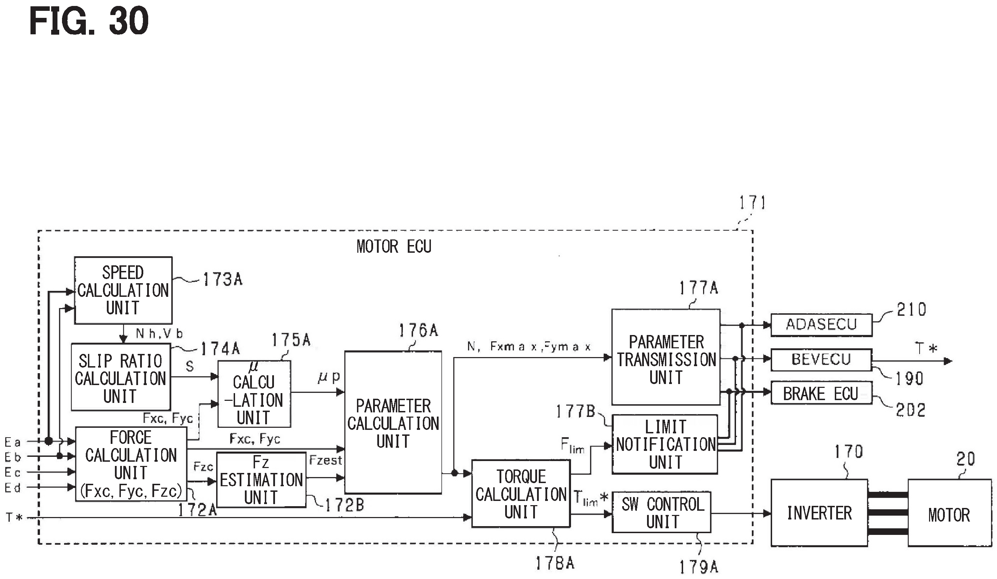

As shown in FIG. 30, in addition to the configuration of the second embodiment, the motor ECU 171 is further provided with an Fz prediction unit 172B. The parameter calculation unit 176A calculates parameters based on the longitudinal force Fxc and lateral force Fyc calculated by the force calculation unit 172A, and the predicted vertical force Fzest, which is the vertical force calculated by the Fz prediction unit 172B.

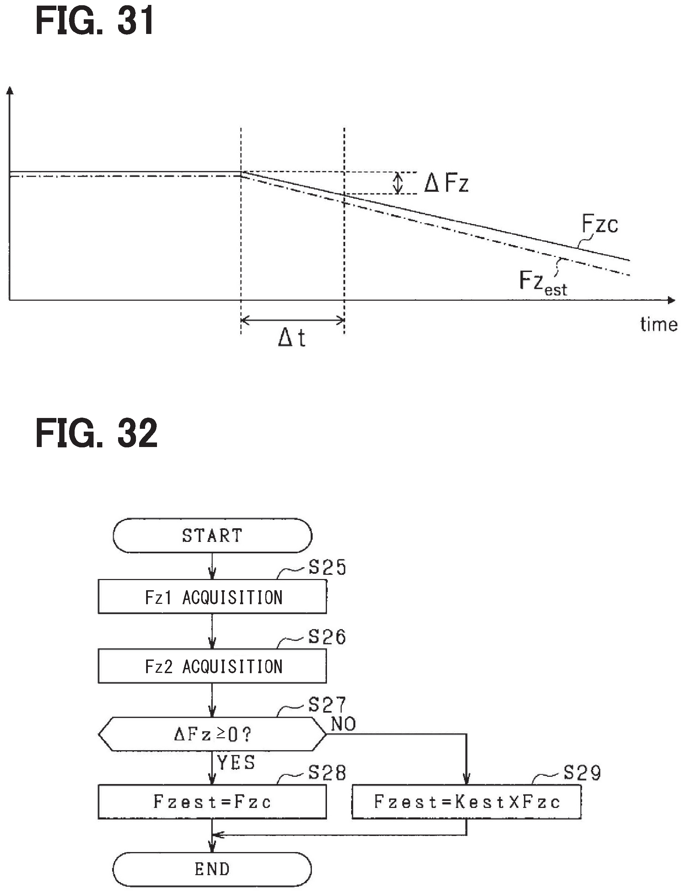

Specifically, the Fz prediction unit 172B acquires the vertical force Fzc from the force calculation unit 172A for each control cycle. FIG. 31 illustrates the time interval for acquiring the vertical force Fzc at a predetermined time $\Delta t$. It is preferable that the predetermined time $\Delta t$ is equal to or less than the time constant of the in-wheel motor 20.

The Fz prediction unit 172B calculates the force variation amount $\Delta Fz$ by subtracting the vertical force Fz2 acquired in the previous control cycle from the vertical force Fz1 acquired in the current control cycle. When the force variation amount $\Delta Fz$ is zero or greater, it can be inferred that the vertical force acting on the tire 13 is increasing or remaining constant. In addition, when the force variation amount $\Delta Fz$ is less than zero, it can be inferred that the vertical force is decreasing. Here, the smaller the vertical force, the more likely the tire 13 is to slip. Therefore, the Fz prediction unit 172B calculates the predicted vertical force Fz_est when the vertical force is decreasing. FIG. 31 shows the relationship between the vertical force Fzc and the predicted vertical force Fzest.

When the Fz prediction unit 172B determines that the force variation amount $\Delta Fz$ is greater than or equal to zero, the Fz prediction unit 172B sets the vertical force Fzc obtained from the force calculation unit 172A as the predicted vertical force Fzest. When the Fz prediction unit 172B determines that the force variation amount $\Delta Fz$ is less than zero, the Fz prediction unit 172B calculates the value($Kest \times Fzc$) obtained by multiplying the vertical force Fzc acquired from the force calculation unit 172A by the coefficient Kest as the predicted vertical force Fzest. Here, the coefficient Kest is a constant that is greater than or equal to 0 and less than 1, or the coefficient Kest is the force variation amount $\Delta Fz$ per predetermined time $\Delta t$. It is preferable for the coefficient Kest to be a constant that is greater than or equal to 0 and less than 1, as this reduces the computational load on the controller. In addition, it is preferable for the coefficient Kest to be $\Delta Fz/\Delta t$, as this provides high accuracy in calculating the predicted vertical force Fzest.

The procedure for calculating the predicted vertical force Fzest will be explained using FIG. 32. The calculation of the predicted vertical force Fzest is executed, for example, between step S11 and step S12 in FIG. 24. In step S25, the vertical force Fz1 for the current control cycle is acquired. In step S26, the vertical force Fz2 from the previous control cycle is acquired. In step S27, the force variation amount $\Delta Fz$ is calculated based on the vertical forces Fz1 and Fz2. Then, it is determined whether the calculated force variation amount $\Delta Fz$ is greater than or equal to zero. If it is determined that the force variation amount $\Delta Fz$ is greater than or equal to zero, the process proceeds to step S28, where the predicted vertical force Fzest is set as the vertical force Fzc. On the other hand, if it is determined that the force variation amount $\Delta Fz$ is less than zero, the process proceeds to step S29, where the predicted vertical force Fzest is set as the value obtained by multiplying the vertical force Fzc by Kest. In the processing following step S12 in FIG. 24, the predicted vertical force Fzest, which is calculated in the process of FIG. 32, is used in place of the vertical force Fzc.

The vertical force acting on the tire 13 can vary each time. Furthermore, for example, due to response delays of actuators such as the in-wheel motor 20, a significant time lag may occur between the point at which the above parameters are calculated and the point at which the in-wheel motor 20 operates. Under such conditions, if the control torque Tlim* is calculated using the vertical force Fzc, there is a concern that, especially when the vertical force Fzc is decreasing, the control torque Tlim* may become larger than the ideal value, causing the tire 13 to slip.

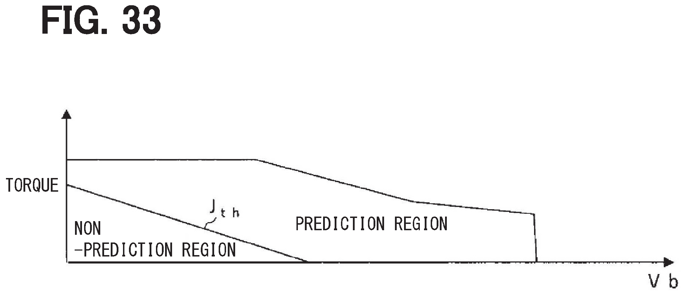

Therefore, especially when the vertical force Fzc is decreasing, the value of the vertical force Fzc, which varies over time, is predicted, and the control torque Tlim* is calculated based on the predicted vertical force Fzc. As a result, slippage of the tire 13 can be suppressed. It is also possible to perform the processing shown in FIG. 32 in the prediction region, which is the region on the positive side of the boundary line Jth shown in FIG. 33. Specifically, the motor ECU 171 may execute the processing shown in FIG. 32 on the condition that the motor ECU 171 determines that the current operating point, defined by the torque of the in-wheel motor 20 and the vehicle body speed Vb, is in the prediction region on the high-speed side of the boundary line Jth shown in FIG. 33.

(Other Embodiments)

It should be noted that each of the above embodiments may be modified and implemented as follows.

The configuration of the target rotor may be modified from one in which shielding portions and notches are alternately formed in the circumferential direction.

For example, in the target rotor, a non-metallic portion such as a synthetic resin may be provided in the notches or openings, so that metallic and non-metallic portions are alternately arranged in the circumferential direction.

In each of the above embodiments, the target rotor may be fixed to the base portion 42 instead of the wheel 10 side, and the detection unit may be fixed to the wheel 10 side instead of the base portion side. In this case, each receiving coil of the detection unit corresponds to the "first sensor unit," and the target rotor corresponds to the "second sensor unit."

The motor is not limited to one housed in the wheel; for example, it may also be an onboard motor provided on the vehicle body. In this case, the wheel sensor may be applied to the wheels (driven or nondriven wheels) of a vehicle equipped with an onboard motor. In a configuration equipped with an onboard motor, for example, a wheel sensor may be provided on the wheel, and a sensor (such as a resolver) for detecting the rotational angle (for example, the electrical angle) of the onboard motor may be provided on the onboard motor. Furthermore, the motor is not limited to an outer rotor type and may also be an inner rotor type.

The θ conversion unit 77 may calculate the vehicle body speed Vb based on either the acceleration of the vehicle 150 or the GPS information.

The slip ratio S used for control is not limited to the value calculated by the μ calculation unit 175A. For example, as the slip ratio S, a slip ratio calculated in another vehicle, rather than in the own vehicle, may be used for control.

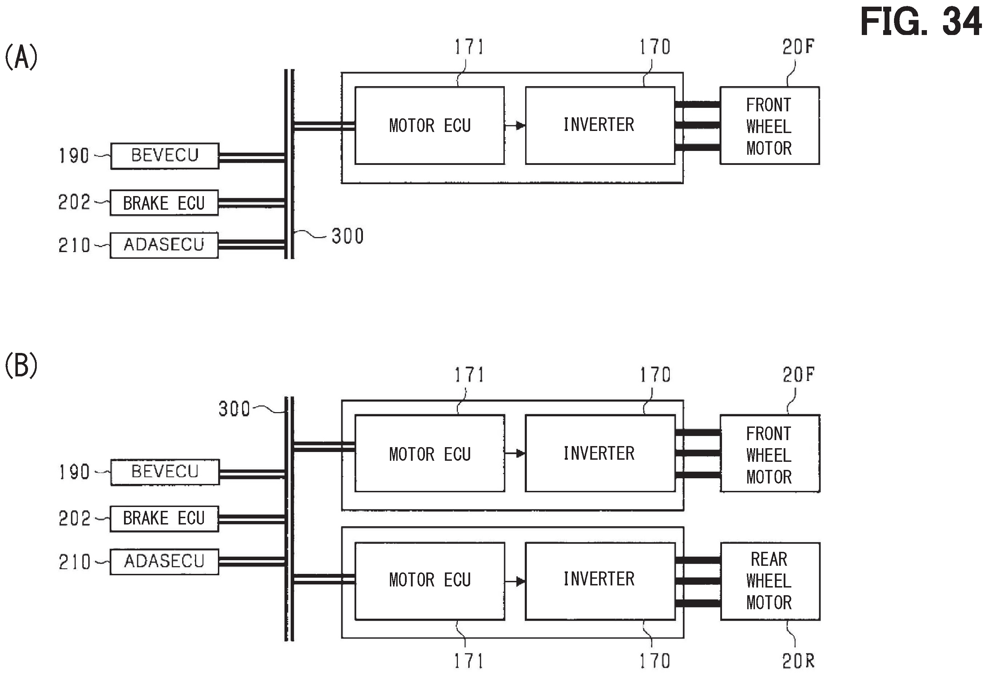

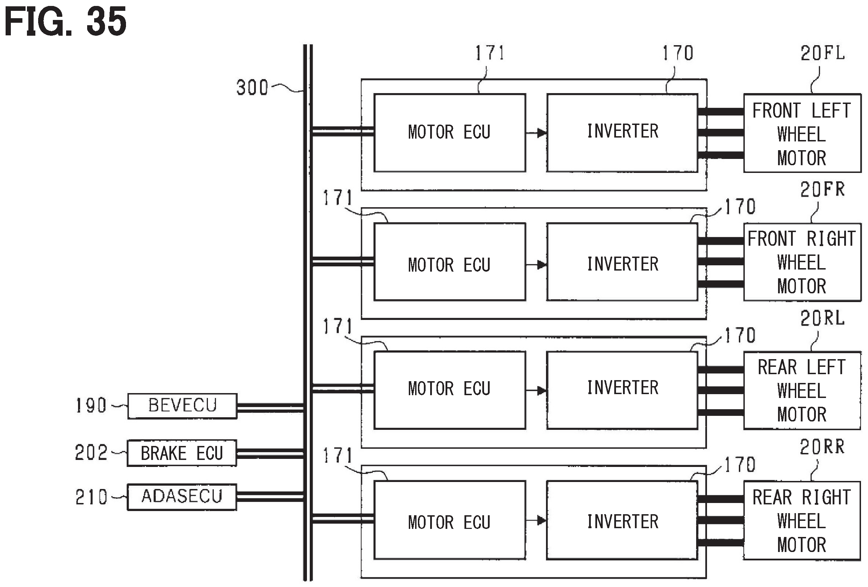

The system of the present disclosure can be applied to various types of vehicles. FIGS. 34 and 35 show examples of various types of vehicles. As shown in FIG. 34(A), in a case where the vehicle 150 includes a front wheel motor 20F that rotationally drives the front wheels, the motor ECU 171 connected to the front wheel motor 20F may be communicably connected to the BEV ECU 190, the brake ECU 202, and the ADAS ECU 210 via a communication bus 300.

As shown in FIG. 34(B), in a case where the vehicle 150 includes a front wheel motor 20F that rotationally drives the front wheels and a rear wheel motor 20R that rotationally drives the rear wheels, each motor ECU 171 connected to the respective motors 20F and 20R may be communicably connected to the BEV ECU 190, the brake ECU 202, and the ADAS ECU 210 via the communication bus 300.

As shown in FIG. 35, in a case where the vehicle 150 is equipped with a motor 20FL that rotationally drives the left front wheel, a motor 20FR that rotationally drives the right front wheel, a motor 20RL that rotationally drives the left rear wheel, and a motor 20RR that rotationally drives the right rear wheel, each motor ECU 171 connected to the respective motors 20FL, 20FR, 20RL, and 20RR may be communicably connected to the BEV ECU 190, the brake ECU 202, and the ADAS ECU 210 via the communication bus 300.

The control device and method described in the present disclosure may be implemented by a dedicated computer provided by configuring a processor and memory programmed to execute one or more functions embodied by a computer program. Alternatively, the controller and method described in the present disclosure may be implemented by a dedicated computer provided by configuring the processor with one or more dedicated hardware logic circuits. Alternatively, the controller and method described in the present disclosure may be implemented by one or more dedicated computers configured by a combination of a processor and memory programmed to execute one or more functions and a processor configured with one or more hardware logic circuits. Furthermore, the computer program may be stored, as instructions to be executed by a computer, on a computer-readable non-transitory tangible recording medium.

The following describes characteristic configurations extracted from the above-described embodiments.

(First Configuration)

A control device (171) is adapted to a wheel sensor. The wheel sensor has a first sensor unit, a second sensor unit, and an excitation coil (100A, 100B). The first sensor unit is fixed to a wheel (10, 20) of a vehicle (150). The first sensor unit is rotated along with a rotation of the wheel around a rotational axis extending in a predetermined axial direction. The second sensor unit is fixed to a base portion (42) and disposed at a position facing the first sensor unit in the predetermined axial direction. A detection target unit (81, 82) is one of the first sensor unit and the second sensor unit. The detection target unit has an annular shape centered on the rotational axis. A receiving coil (110A, 120A, 110B, 120B) is another of the first sensor unit and the second sensor unit. The receiving coil outputs an AC voltage signal having an amplitude that is varied with a relative displacement of the detection target unit to the receiving coil. The excitation coil receives an AC excitation voltage. The control device includes: a force calculation unit that calculates a force acting on the wheel based on the AC voltage signal output from the receiving coil; and a parameter calculation unit that calculates a parameter to be used in slip suppression control of the vehicle based on the calculated force.

(Second Configuration)

In the control device according to the first configuration, the force calculation unit calculates, based on the AC voltage signal output from the receiving coil, a lateral force, a longitudinal force and a vertical force that act on the wheel, the vertical force being exerted from a road surface on which the vehicle is travelling. The parameter calculation unit calculates, as the parameter, an allowable upper limit value of the lateral force (Fymax) acting on the wheel and an allowable upper limit value of the longitudinal force (Fxmax) acting on the wheel such that a condition is met. The condition is met when a resultant force does not exceed a friction circle of the wheel, based on the calculated lateral force, the calculated longitudinal force, and the calculated vertical force, the resultant force being a vector sum of the lateral force and the longitudinal force. The resultant force is a vector sum of the lateral force and the longitudinal force.

(Third Configuration)

The control device according to the second configuration is adapted to a system that includes: a rotary electric machine (20) that has a stator (30) and a stator winding (41); a DC power supply (180); an inverter (170) that electrically connects the stator winding to the DC power supply; and the wheel sensor. The system rotates the wheel by transmitting rotational power of the rotary electric machine to the wheel. The control device includes a switch control unit and a determination unit. The switch control unit executes switching control of the inverter to control a torque of the rotary electric machine to a commanded torque (T*). The determination unit determines whether the resultant force exceeds the friction circle based on the calculated allowable upper limit value of the longitudinal force. The switch control unit switching is configured to control the torque of the rotary electric machine to a restricted torque (K×Tper) smaller than the commanded torque, on a condition that the determination unit determines that the resultant force exceeds the friction circle.

(Fourth Configuration)

The system to which the control device according to any one of the first to third configurations includes: a mechanical brake device (200) that applies a braking force to the wheel of the vehicle; and a braking force controller (202) that controls the braking force applied by the mechanical brake device. In the system, a control period of the control device is shorter than a control period of the braking force controller.

(Fifth Configuration)

The system to which the control device according to any one of the first to fourth configurations includes: a driving controller (210) that creates a driving plan of the vehicle; and a higher-level controller (190) that functions as a supervisory controller over the braking force controller and the driving controller. The control device further includes a parameter communication unit (177A) that communicates with at least one of the braking force controller, the driving controller, and the higher-level controller. The parameter communication unit transmits the calculated parameter to at least one of the braking force controller, the driving controller, or the higher-level controller.

(Sixth Configuration)

The system to which the control device according to any one of the first to fifth configurations includes a higher-level controller (190) that is communicatively connected to the control device, and transmits the commanded torque to the control device. The control device includes a limit notification unit (177B) that receives the commanded torque from the higher-level controller, executes a comparison between the received commanded torque and the restricted torque, and transmits a result of the comparison to the higher-level controller.

(Seventh Configuration)

The control device according to any one of the second to sixth configurations includes a prediction unit (174B) that predicts a vertical force acting on the wheel from the road surface on which the vehicle is travelling, based on the vertical force calculated by the force calculation unit. In the control device, the restricted torque is calculated based on the vertical force predicted by the prediction unit.

Although the present disclosure has been described in accordance with certain embodiments, it is understood that the present disclosure is not limited to these embodiments or structures. The present disclosure also encompasses various modifications and equivalents within the scope of the invention. Additionally, a variety of combinations and configurations-including those containing only one element, more than one element, or fewer elements-are also considered to fall within the scope and spirit of the present disclosure.

**Claims**

1. A control device adapted to a wheel sensor, the wheel sensor having a first sensor unit, a second sensor unit, and an excitation coil (100A, 100B), the first sensor unit being fixed to a wheel (10, 20) of a vehicle (150), the first sensor unit configured to be rotated along with a rotation of the wheel around a rotational axis extending in a predetermined axial direction, the second sensor unit being fixed to a base portion (42) and disposed at a position facing the first sensor unit in the predetermined axial direction, a detection target unit (81, 82) being one of the first sensor unit and the second sensor unit, the detection target unit having an annular shape centered on the rotational axis, a receiving coil (110A, 120A, 110B, 120B) being another of the first sensor unit and the second sensor unit, the receiving coil configured to output an AC voltage signal having an amplitude that is varied with a relative displacement of the detection target unit to the receiving coil, the excitation coil configured to receive an AC excitation voltage, the control device comprising:

   a force calculation unit configured to calculate a force acting on the wheel based on the AC voltage signal output from the receiving coil; and
   a parameter calculation unit configured to calculate a parameter to be used in slip suppression control of the vehicle based on the calculated force.

2. The control device according to Claim 1, wherein

   the force calculation unit is configured to calculate, based on the AC voltage signal output from the receiving coil, a lateral force, a longitudinal force and a vertical force that act on the wheel, the vertical force being exerted from a road surface on which the vehicle is travelling, and
   the parameter calculation unit is configured to:
   calculate, as the parameter, an allowable upper limit value of the lateral force (Fymax) acting on the wheel and an allowable upper limit value of the longitudinal force (Fxmax) acting on the wheel such that a condition is met, the condition being met when a resultant force does not exceed a friction circle of the wheel, based on the calculated lateral force, the calculated longitudinal force, and the calculated vertical force, the resultant force being a vector sum of the lateral force and the longitudinal force.

3. The control device according to Claim 2, wherein

   the control device is adapted to a system that includes:

   a rotary electric machine (20) including a stator (30) and a stator winding (41);
   a DC power supply (180);
   an inverter (170) electrically connecting the stator winding to the DC power supply; and
   the wheel sensor,

   the system is configured to rotate the wheel by transmitting rotational power of the rotary electric machine to the wheel, the control device comprising:

   a switch control unit configured to, by executing switching control of the inverter, to adjust a torque of the rotary electric machine to a commanded torque (T*); and
   a determination unit configured to determine whether the resultant force exceeds the friction circle based on the calculated allowable upper limit value of the longitudinal force, wherein
   the switch control unit is configured to, by executing the switching control, adjust the torque of the rotary electric machine to a limited value (K×Tper) lower than the commanded torque, on a condition that the determination unit determines that the resultant force exceeds the friction circle.

4. The control device according to Claim 3, wherein

the system includes:

a mechanical brake device (200) that is configured to apply a braking force to the wheel of the vehicle; and a braking force controller (202) that is configured to control the braking force applied by the mechanical brake device, and

a control period of the control device is shorter than a control period of the braking force controller.

5. The control device according to Claim 4, wherein

the system includes:

a driving controller (210) configured to generate a driving plan of the vehicle; and a higher-level controller (190) configured to function as a supervisory controller over the braking force controller and the driving controller, the control device comprising:

a parameter communication unit (177A) configured to communicate with at least one of the braking force controller, the driving controller, and the higher-level controller, wherein the parameter communication unit is configured to transmit the calculated parameter to at least one of the braking force controller, the driving controller, or the higher-level controller.

6. The control device according to Claim 3, wherein the system includes a higher-level controller (190) configured to be communicatively connected to the control device and to transmit the commanded torque to the control device, the control device comprising: a limit notification unit (177B) configured to

receive the commanded torque from the higher-level controller, execute a comparison between the received commanded torque and the restricted torque, and transmit a result of the comparison to the higher-level controller.

7. The control device according to Claim 3, further comprising:

a prediction unit (174B) configured to predict a vertical force acting on the wheel from the road surface on which the vehicle is travelling, based on the vertical force calculated by the force calculation unit, wherein the restricted torque is calculated based on the vertical force predicted by the prediction unit.

8. A program adapted to a system including a wheel sensor and a computer (171a), the wheel sensor having a first sensor unit, a second sensor unit, and an excitation coil (100A, 100B), the first sensor unit being fixed to a wheel (10, 20) of a vehicle (150), the first sensor unit configured to be rotated along with a rotation of the wheel around a rotational axis extending in a predetermined axial direction, the second sensor unit being fixed to a base portion (42) and disposed at a position facing the first sensor unit in the predetermined axial direction, a detection target unit (81, 82) being one of the first sensor unit and the second sensor unit, the detection target unit having an annular shape centered on the rotational axis, a receiving coil (110A, 120A, 110B, 120B) being another of the first sensor unit and the second sensor unit, the receiving coil configured to output an AC voltage signal having an amplitude that is varied with a relative displacement of the detection target unit to the receiving coil, the excitation coil configured to receive an AC excitation voltage, the program configured to cause the computer to execute:

calculating a force acting on the wheel based on the AC voltage signal output from the receiving coil; and calculating a parameter used in slip suppression control of the vehicle based on the calculated force.

# FIG. 1

# FIG. 2

# FIG. 3

# FIG. 4

(a)

(b)

(c)

# FIG. 5

# FIG. 6

# FIG. 7

EP 4 786 246 A1

# FIG. 8

MOTOR ECU — 171

SPEED CALCULATION UNIT — 173A

SLIP RATIO CALCULATION UNIT — 174A

$\mu$ CALCULATION UNIT — 175A

FORCE CALCULATION UNIT (Fxc, Fyc, Fzc) — 172A

PARAMETER CALCULATION UNIT — 176A

PARAMETER TRANSMISSION UNIT — 177A

TORQUE CALCULATION UNIT — 178A

SW CONTROL UNIT — 179A

ADASECU — 210

BEVECU — 190

BRAKE ECU — 202

INVERTER — 170

MOTOR — 20

Nh, Vb

Fxc, Fzc

Fxc, Fyc, Fzc

$\mu$p

S

N, Fxmax, Fymax

$T_{lim}$*

T*

Ea
Eb
Ec
Ed
T*

# FIG. 9

# FIG. 10

# FIG. 11

EXCITATION COIL

$v r (t)$

$v e (t)$

$\phi (t)$

RECEIVING
COIL

$$v e (t) \propto \frac{d \phi (t)}{d t}$$

# FIG. 12

SHIELDING
PORTION

EDDY CURRENT

$\phi (t)$

$v e (t)$

RECEIVING
COIL

# FIG. 13

# FIG. 14

# FIG. 15

# FIG. 16

WHEN Fy IS APPLIED

# FIG. 17

(a) TARGET ROTOR UPPER END TILTS INWARD (OUTWARD Fy INCREASE)

(b) TARGET ROTOR UPPER END TILTS OUTWARD (INWARD Fy INCREASE)

# FIG. 18

WHEN Fz IS APPLIED

# FIG. 19

(a) REFERENCE STATE

81a    120A
C1
C2
110A    81

(b) TARGET ROTOR DISPLACED UPWARD (UPWARD Fz INCREASE)

81a    120A
C1
C2
110A
81

(c) TARGET ROTOR DISPLACED DOWNWARD (DOWNWARD Fz INCREASE)

120A
C1
81a
C2
110A    81

# FIG. 20

(a) REFERENCE STATE

(b) TARGET ROTOR DISPLACED UPWARD (UPWARD Fz INCREASE)

(c) TARGET ROTOR DISPLACED DOWNWARD (DOWNWARD Fz INCREASE)

# FIG. 21

SPEED CALCULATION UNIT 173A

AD CONVERTER 71B → SIGNAL PROCESSING UNIT 72B → NORMALI-ZATION UNIT 75 → ROTA-TIONAL ANGLE CALCU-LATION UNIT 76 → θ CONVER-SION UNIT 77 → SLIP RATIO CALCULATION UNIT 174A

Signals: Ea, Eb, A, B → Ean, Ebn → θc → Nh

FORCE CALCULATION UNIT 172A

AD CONVERTER 71A → SIGNAL PROCESSING UNIT 72A

Inputs: Ea, Eb, Ec, Ed

A, B, C, D → DISPLACEMENT CALCULATION UNIT 73 → Δz, Δx, Δy → DISPLACEMENT CONVERSION UNIT 74 → Fyc → PARAMETER CALCULATION UNIT 176A

Fxc, Fzc → μ CALCULATION UNIT 175A

EP 4 786 246 A1

# FIG. 22

# FIG. 23

# FIG. 24

START

SLIP RATIO CALCULATION — S10

FORCE CALCULATION — S11

μP CALCULATION — S12

PARAMETER CALCULATION — S13

PARAMETER TRANSMISSION — S14

Tlim* CALCULATION — S15

FB CONTROL — S16

END

# FIG. 25

```
        ┌─────────────────────────┐
        │   Tlim* CALCULATION     │
        └─────────────────────────┘
                    │
                    ▼              ～S17
        ┌─────────────────────────┐
        │  PARAMETER ACQUISITION  │
        └─────────────────────────┘
                    │
                    ▼              ～S18
        ┌─────────────────────────┐
        │     T* ACQUISITION      │
        └─────────────────────────┘
                    │
                    ▼              ～S19
        ╱─────────────────────────╲    NO
        ⟨      T* ≤ Tper?         ⟩──────────────┐
        ╲─────────────────────────╱              │
              │ YES        ～S20                  ▼              ～S21
        ┌─────────────────────┐      ┌─────────────────────────┐
        │     Tlim* = T*      │      │    Tlim* = K·Tper       │
        └─────────────────────┘      └─────────────────────────┘
                    │◄──────────────────────────────┘
                    ▼
        ┌─────────────────────┐
        │       RETURN        │
        └─────────────────────┘
```

# FIG. 26

# FIG. 27

```
            START
              │
              ▼           S10
    SLIP RATIO CALCULATION
              │
              ▼           S11
      FORCE CALCULATION
              │
              ▼           S12
        μP CALCULATION
              │
              ▼           S13
    PARAMETER CALCULATION
              │
              ▼           S14
   PARAMETER TRANSMISSION
              │
              ▼           S15
      Tlim* CALCULATION
              │
              ▼           S22
      Flim NOTIFICATION
              │
              ▼           S16
         FB CONTROL
              │
              ▼
             END
```

# FIG. 28

```
           ( Tlim* CALCULATION )
                    |
                    |            ～ S17
        ┌───────────────────────────┐
        │   PARAMETER ACQUISITION    │
        └───────────────────────────┘
                    |
                    |            ～ S18
        ┌───────────────────────────┐
        │      T* ACQUISITION        │
        └───────────────────────────┘
                    |
                    |            ～ S19
              ╱─────────────╲              NO
             ⟨  T* ≤ Tper?   ⟩─────────────┐
              ╲─────────────╱              │
                    | YES                  |
                    |      ～ S20          |       ～ S21
        ┌───────────────────┐    ┌───────────────────────┐
        │    Tlim* = T*      │    │   Tlim* = K · Tper     │
        └───────────────────┘    └───────────────────────┘
                    |      ～ S23         |        ～ S24
        ┌───────────────────┐    ┌───────────────────────┐
        │     Flim = 0       │    │       Flim = 1         │
        └───────────────────┘    └───────────────────────┘
                    |                     |
                    |←────────────────────┘
                    |
              (    RETURN    )
```

43

# FIG. 29

# FIG. 30

MOTOR ECU — 171

- SPEED CALCULATION UNIT — 173A
- SLIP RATIO CALCULATION UNIT — 174A
- $\mu$ CALCU-LATION UNIT — 175A
- PARAMETER CALCULATION UNIT — 176A
- FORCE CALCULATION UNIT (Fxc, Fyc, Fzc) — 172A
- Fz ESTIMATION UNIT — 172B
- PARAMETER TRANSMISSION UNIT — 177A
- LIMIT NOTIFICATION UNIT — 177B
- TORQUE CALCULATION UNIT — 178A
- SW CONTROL UNIT — 179A
- ADASECU — 210
- BEVECU — 190
- BRAKE ECU — 202
- INVERTER — 170
- MOTOR — 20

N h, V b

S

$\mu$ p

Fxc, Fyc

Fxc, Fyc

Fzc

Fzest

N, Fxmax, Fymax

$F_{lim}$

$T_{lim}*$

T*

E a
E b
E c
E d

T*

# FIG. 31

# FIG. 32

START

$Fz1$ ACQUISITION — S25

$Fz2$ ACQUISITION — S26

$\Delta Fz \geq 0$? — S27

YES

$Fzest = Fzc$ — S28

NO

$Fzest = Kest \times Fzc$ — S29

END

# FIG. 33

FIG. 34

(A)

(B)

EP 4 786 246 A1

FIG. 35

## INTERNATIONAL SEARCH REPORT

| International application No. |
| --- |
| **PCT/JP2024/031468** |

### A. CLASSIFICATION OF SUBJECT MATTER

***B60L 3/10***(2006.01)i; ***B60B 35/02***(2006.01)i; ***B60L 9/18***(2006.01)i; ***B60T 8/171***(2006.01)i; ***B60T 8/172***(2006.01)i; ***B60W 30/02***(2012.01)i; ***G01L 5/20***(2006.01)i
FI: B60L3/10 Z; B60L9/18 S; G01L5/20; B60T8/171 Z; B60T8/172 B; B60B35/02 L; B60W30/02

According to International Patent Classification (IPC) or to both national classification and IPC

### B. FIELDS SEARCHED

Minimum documentation searched (classification system followed by classification symbols)

B60L3/10; B60B35/02; B60L9/18; B60T8/171; B60T8/172; B60W30/02; G01L5/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2023-130285 A (SOKEN, INC.) 20 September 2023 (2023-09-20) claims 1-2, 7, 10, paragraph [0002] | 1-4, 7-8 |
| A | entire text, all drawings | 5-6 |
| Y | JP 2019-217838 A (JTEKT CORP.) 26 December 2019 (2019-12-26) claim 1, paragraphs [0006], [0024]-[0026], [0029], [0050]-[0060] | 1-4, 7-8 |
| A | entire text, all drawings | 5-6 |

☐ Further documents are listed in the continuation of Box C.    ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 October 2024** | **29 October 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/031468**

| Patent document cited in search report | | | Publication date (day/month/year) | Patent family member(s) | Publication date (day/month/year) |
|---|---|---|---|---|---|
| JP | 2023-130285 | A | 20 September 2023 | (Family: none) | |
| JP | 2019-217838 | A | 26 December 2019 | US 2019/0381989 A1 claim 1, paragraphs [0006], [0031]-[0033], [0036], [0057]-[0067] DE 102019116231 A1 CN 110667586 A | |

Form PCT/ISA/210 (patent family annex) (July 2022)

**EP 4 786 246 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023165943 A
- JP 2019217838 A